# EUROPÄISCHE PATENTSCHRIFT

(11) **EP 3 350 008 B1**
(45) Veröffentlichungstag und Bekanntmachung des Hinweises auf die Patenterteilung: **27.02.2019**
(21) Anmeldenummer: 16754214.1
(22) Anmeldetag: 01.08.2016
(51) Int. Cl.: B60K 15/03, B60K 15/035

(54) **VERFAHREN ZUM BEFÜLLEN EINES KRAFTFAHRZEUGTANKS UND ZUGEHÖRIGER KRAFTFAHRZEUGTANK**
METHOD FOR FILLING A MOTOR VEHICLE TANK AND ASSOCIATED MOTOR VEHICLE TANK
PROCÉDÉ DE REMPLISSAGE D'UN RÉSERVOIR DE VÉHICULE AUTOMOBILE ET RÉSERVOIR ASSOCIÉ DE VÉHICULE AUTOMOBILE

(30) Priorität: 15.09.2015 DE 102015217608
(43) Veröffentlichungstag der Anmeldung: 25.07.2018
(73) Patentinhaber: Kautex Textron GmbH & Co. KG, 53229 Bonn (DE)
(72) Erfinder: WOLF, Hartmut, 53639 Königswinter (DE); EULITZ, Dirk, 53115 Bonn (DE); OSSEGE, Theodor, 53619 Rheinbreitbach (DE); GEBERT, Klaus, 47877 Willich (DE); KARSCH, Ulrich, 53859 Niederkassel (DE); ERBEN, Christian, 47626 Kevelaer (DE); ELSASSER, Carsten, 50259 Pulheim (DE)
(74) Vertreter: Richly & Ritschel Patentanwälte PartG mbB
(86) Internationale Anmeldenummer: PCT/EP2016/068337
(87) Internationale Veröffentlichungsnummer: WO 2017/045831

(56) Entgegenhaltungen:
- EP-A1- 1 707 422
- DE-A1- 10 020 000
- DE-A1-102011 113 101
- DE-C1- 19 834 671
- DE-U1-202014 006 179
- FR-A1- 2 907 212
- US-A1- 2014 266 650
- US-A1- 2015 027 571

## Beschreibung

Die vorliegende Erfindung betrifft ein Verfahren zum Betanken eines Kraftfahrzeugs und ein Tanksystem in einem Kraftfahrzeug zum Ausführen des Verfahrens zum Betanken eines Kraftfahrzeugs.

Aus dem Stand der Technik bekannte Tanksysteme weisen keinerlei Vorrichtungen auf, die dem Fahrer oder Betanker eines Kraftfahrzeugs eine bedarfsgerechte Betankung erleichtern oder ihn dabei unterstützen. Daher ist es üblich, dass ein Fahrer sein Kraftfahrzeug (im Folgenden als Kfz abgekürzt) mit Kraftstoff entweder komplett füllt, oder je nach Höhe des mitgeführten Geldbetrags bis hin zu diesem Betrag den Kfz-Tank auffüllt, oder abschätzt, wie viel Kraftstoff für das Zurücklegen einer Fahrtstrecke notwendig ist, und die entsprechende Menge an Kraftstoff in den Kfz-Tank füllt.

Wenn der Kfz-Tank beispielsweise lediglich bis zu dem Grad gefüllt wird, der der Schätzung des Fahrers entspricht oder der dem mitgeführten Geldbetrag entspricht, kann dies zu dem Problem führen, dass das Fahrtziel des Fahrers mit der mitgeführten Kraftstoffmenge nicht oder lediglich mit einer gewissen Unsicherheit erreicht wird, da beispielsweise Witterungseinflüsse zu einem Mehrverbrauch führen können. Hohe Temperaturen können beispielsweise einen Mehrverbrauch durch Aktivierung einer Klimaanlage verursachen. Regenfall während der Fahrt kann auch aufgrund einer Erhöhung des Rollwiederstandes den Verbrauch des Kfz erhöhen. Verkehrsstaus können aufgrund von einer Umgehungsstrecke oder wegen längerer Motorlaufzeiten zu einem Mehrverbrauch führen. Weiterhin kann ein ungünstiges Höhenprofil der zu fahrenden Strecke einen Mehrverbrauch bedingen.

Wenn der Kfz-Tank hingegen beispielsweise komplett gefüllt wird, wird für eine Reise häufig zu viel Kraftstoff mitgeführt. Dies hat aufgrund von Beschleunigungen des Kfz zur Folge, dass der Kraftstoffverbrauch erhöht wird, da bei den Beschleunigungsvorgängen auch der unnötig mitgeführte Kraftstoff stets beschleunigt werden muss, was zu einer Erhöhung des Kohlenstoffdioxid-ausstoßes führt.

Ferner bedingt bei Kraftfahrzeugen, insbesondere bei Hybrid-Kraftfahrzeugen und dort insbesondere bei Plug-In-Hybrid-Kraftfahrzeugen (im Folgenden als PHEV abgekürzt; englische Abkürzung für plug-in hybrid electric vehicle) ein Mitführen von nicht benötigtem Kraftstoff eine Alterung des nicht verbrannten Kraftstoffs. PHEV weisen eine hohe rein elektrisch zurücklegbare Reichweite auf. In Städten werden zunehmend sogenannte Umweltzonen eingerichtet, in denen ein Betrieb eins Kfz mit Verbrennungsmotor verboten ist. Daher werden große Strecken mit rein elektrischem Antrieb zurückgelegt, ohne dass der Verbrennungsmotor aktiviert und Kraftstoff verbrannt wird. Eine Batterie des PHEV wird bei Bedarf wieder geladen, so dass weiterhin rein elektrisch gefahren werden kann. Dies führt dazu, dass mitgeführter und nicht verbrauchter/verbrannter Kraftstoff im Kfz-Tank oft über Wochen und Monate altert.

Diese Alterung wiederum führt zu einer Erhöhung des Schadstoffausstoßes bei Verbrennung des gealterten Kraftstoffes. Weiterhin wird bei der Verbrennung von gealtertem Kraftstoff weniger Energie freigesetzt als bei frischem Kraftstoff, so dass der Kohlenstoffdioxidausstoß für eine vorgegebene Strecke weiter erhöht wird. Ferner können durch den gealterten Kraftstoff Komponenten des Kraftfahrzeugbehälters angegriffen z.B. korrodiert werden, so dass die Langzeitfunktionalität des Kraftstoffbehälters beeinträchtigt werden kann.

Ein Verfahren nach dem Oberbegriff des Anspruchs 1 und ein Kraftfahrzeugtank nach dem Oberbegriff des Anspruchs 13 sind aus der US 2014/266650 A1 bekannt.

Der vorliegenden Erfindung liegt die Aufgabe zugrunde, ein Verfahren zum Betanken eines Kfz und ein Tanksystem für ein Kfz zum Ausführen des Verfahrens bereitzustellen, mittels denen die oben angegebenen Probleme gelöst werden.

Diese der vorliegenden Erfindung zugrunde liegenden Aufgaben werden durch ein Verfahren mit den Merkmalen des Anspruchs 1 und durch einen Kraftfahrzeugtank mit den Merkmalen des Anspruchs 13 gelöst. Vorteilhafte Ausgestaltungen der Erfindung sind in den abhängigen Ansprüchen beschrieben.

Durch das erfindungsgemäße Verfahren wird erreicht, dass der Kraftfahrzeugtank mit einer geeigneten Kraftstoffmenge befüllt wird, die beispielsweise zum Erreichen eines vorgegebenen Ziels notwendig ist, ohne dass seitens des Fahrers bzw. des Betankers des Kraftfahrzeugtanks Schätzungen hinsichtlich der einzufüllenden Kraftstoffmenge angestellt werden müssen. Somit kann gewährleistet werden, dass genügend Kraftstoff in das Kraftfahrzeug eingefüllt wird, um das vorgegebene Ziel zu erreichen. Jedoch wird nicht zu viel Kraftstoff in den Kraftfahrzeugtank eingeleitet, so dass nur die notwendige Kraftstoffmenge bei den jeweiligen Beschleunigungsvorgängen des Kraftfahrzeugs auch beschleunigt werden, wodurch der Kraftstoffverbrauch des Kraftfahrzeugs und somit auch dessen Kohlendioxidausstoß reduziert werden. Zusammenfassend erhöht das erfindungsgemäße Verfahren den Tankkomfort, die Sicherheit des Erreichens eines vorgegebenen Ziels und verringert den Kohlenstoffdioxidausstoß eines Kfz.

Der elektronische Datenspeicher kann ein Teil einer fahrzeugseitigen Steuereinrichtung, zum Beispiel eines Bordcomputers sein. Ferner kann der elektronische Datenspeicher Teil einer Navigationseinrichtung sein, wobei die Navigationseinrichtung Teil eines Kraftfahrzeugs oder Teil eines mobilen Endgeräts sein kann. Der Datenspeicher kann auch ein Teil eines mobilen Endgeräts, zum Beispiel eines Smartphones oder eines Navigationsprogramms auf einem Smartphone sein. Weiterhin ist es auch möglich, dass der elektronische Datenspeicher Teil einer Computereinrichtung ist, mittels der eine sogenannte Datenwolke generiert wird, auf die beispielsweise ein Bordcomputer des Fahrzeugs oder ein mobiles Endgerät (beispielsweise in Form eines Smartphones) oder die Tanksteuereinrichtung direkt zugreifen kann. Begrenzungen hinsichtlich der Elektronikeinheiten, die den elektronischen Datenspeicher umfassen, bestehen diesbezüglich nicht.

Die Verfahrensschritte des erfindungsgemäßen Verfahrens können von der fahrzeugseitigen Tanksteuereinrichtung und/oder von einem anderen elektronischen Gerät, zum Beispiel von einem Smartphone, das den elektronischen Datenspeicher umfasst, durchgeführt werden. So kann das Etablieren der Datenaustauschverbindung zwischen der Tanksteuereinrichtung und dem elektronischen Datenspeicher durch die Tanksteuereinrichtung und/oder durch die den elektronischen Datenspeicher aufweisende Elektronikeinheit initiiert werden. Ferner kann das Ermitteln der in den Kraftfahrzeugtank einzufüllenden Kraftstoffmenge durch die Tanksteuereinrichtung und/oder durch die den elektronischen Datenspeicher umfassenden Elektronikeinheit durchgeführt werden. Auch die Verfahrensschritte des Startens des Befüllvorganges und des Beendens des Befüllvorganges können durch die Tanksteuereinrichtung und/oder durch eine den elektronischen Datenspeicher aufweisende Elektronikeinheit durchgeführt werden.

Die Ermittlung der einzufüllenden Kraftstoffmenge kann auf mannigfaltige Art und Weise erfolgen. So kann beispielsweise die einzufüllende Kraftstoffmenge aus der den elektronischen Datenspeicher aufweisenden Elektronikeinheit übertragen werden. Hierzu weist dann die den elektronischen Datenspeicher aufweisende Elektronikeinheit sämtliche notwendigen Informationen auf, um die einzufüllende Kraftstoffmenge zu berechnen (z. B. die Distanz zu einem Zielort und einen durchschnittlichen Kraftstoffverbrauch des Kfz). Ferner kann die einzufüllende Kraftstoffmenge auch dadurch ermittelt werden, dass von der den elektronischen Datenspeicher aufweisenden Elektronikeinheit die Distanz zum Zielort an die Tanksteuereinrichtung übertragen wird, wobei die Berechnung der einzufüllenden Kraftstoffmenge in der Tanksteuereinrichtung unter Berücksichtigung der zurückzulegenden Distanz erfolgt.

Bei dem Verfahrensschritt des Ermittelns der einzufüllenden Kraftstoffmenge kann beispielsweise eine Sollkraftstoffmenge in einem Bordcomputer des Kfz und/oder in einem mobilen Endgerät berechnet werden. Hierzu muss dann der Bordcomputer bzw. das mobile Endgerät die Distanz zum Fahrtziel und beispielsweise den Durchschnittsverbrauch des Kfz, was eine verbrauchsrelevante Größe darstellt, kennen.

Das Starten und/oder das Beenden des Befüllvorganges kann entweder von der Tanksteuereinrichtung und/oder von einer den elektronischen Datenspeicher aufweisenden Elektronikeinheit (zum Beispiel Smartphone) initiiert werden. Beispielsweise wird dazu dann entsprechend ein Befüllstartsignal und/oder ein Befüllstoppsignal an eine Befülleinrichtung (Zapfsäule, Zapfventil) und/oder an einen im Tank befindlichen elektrisch und/oder elektromagnetisch betätigbaren Aktuator ausgegeben. Unter einem elektrisch bzw. elektromagnetisch betätigbaren Aktuator ist im Sinne der vorliegenden Erfindung auch ein elektromechanisch betätigbarer Aktuator zu verstehen.

Vorzugsweise ist das Beenden des Befüllvorganges mittels der Tanksteuereinrichtung und/oder einer den elektronischen Datenspeicher umfassenden Elektronikeinheit initiierbar.

Vorzugsweise umfasst das erfindungsgemäße Verfahren einen Verfahrensschritt zum Ermitteln der während des Betankungsvorganges eingefüllten Kraftstoffmenge.

Vorzugsweise umfasst der Verfahrensschritt des Ermittelns der in den Kraftfahrzeugtank einzufüllenden Kraftstoffmenge einen Verfahrensschritt zum Ermitteln einer Distanz zu einem vorgegebenen Fahrtziel aus dem elektronischen Datenspeicher, einen Verfahrensschritt zum Ermitteln von zumindest einer verbrauchsrelevanten Größe aus dem elektronischen Datenspeicher, und einen Verfahrensschritt zum Berechnen der einzufüllenden Kraftstoffmenge zur Erreichung des vorgegebenen Fahrtziels unter Verwendung der ermittelten Distanz und der ermittelten verbrauchsrelevanten Größe.

Ein entsprechend ausgebildetes Verfahren erhöht nochmals den Betankungskomfort für den Fahrer bzw. den Betanker des Kraftfahrzeugtanks, da seitens des Fahrers bzw. des Betanker keinerlei Abschätzungen hinsichtlich der einzufüllenden Kraftstoffmenge vorzunehmen sind, da dies automatisch durchgeführt wird.

Die Ermittlung der Distanz bis zum Fahrtziel kann mittels der Tanksteuereinrichtung erfolgen. Bei dem Verfahrensschritt des Berechnens der einzufüllenden Kraftstoffmenge zum Erreichen des vorgegebenen Fahrtziels kann beispielsweise die einzufüllende Kraftstoffmenge, die auch als Sollkraftstoffmenge bezeichnet werden kann, in einem Bordcomputer des Kfz oder in einem mobilen Endgerät oder in einer eine Datenwolke bereitstellen Datenverarbeitungsanlage berechnet werden. Hierzu muss dann der Bordcomputer bzw. das mobile Endgerät oder bzw. die Datenverarbeitungsanlage die Distanz zum Fahrtziel und beispielsweise den Durchschnittsverbrauch des Kfz als verbrauchsrelevante Größe kennen.

Vorzugsweise ist die verbrauchsrelevante Größe ausgewählt aus Navigationsdaten und/oder einem Höhenprofil und/oder Streckenprofil einer zu fahrenden Strecke, und/oder einem durchschnittlichen Kraftstoffverbrauch des Kfz, und/oder einem Fahrverhaltensprofil des Fahrers, und/oder aus Kalendereinträgen in einem elektronischen Kalender des Fahrers, und/oder aus Wetterdaten, und/oder einem Temperaturprofil entlang einer zu fahrenden Strecke, und/oder aus Verkehrsinformationsdaten, und/oder aus Informationen über den Ladezustand einer zum Antrieb des Kraftfahrzeugs vorgesehenen Batterie (die auch als Traktionsbatterie bezeichnet wird), und/oder aus Kraftstoffpreisdaten von in der Umgebung und/oder der entlang der zu fahrenden Strecke befindlichen Tankstellen.

Zu den Navigationsdaten gehören die zurückzulegende Distanz und/oder die Streckencharakteristik, die sich aus dem prozentualen Anteil von Stadtfahrten, Landstraßenfahrten, Autobahnfahrten und dem Streckenprofil usw. zusammensetzt. Das Fahrverhaltensprofil wird auch als Fahrprofil des Fahrers bezeichnet und kann beispielsweise vom Bordcomputer des Kfz angelegt werden und berücksichtigt die Fahreigenschaften des Fahrers, z.B. sein Beschleunigungsverhalten (Stärke und Dauer der Beschleunigungen), sein Bremsverhalten (Stärke und Dauer der durchgeführten Bremsungen), die durchschnittliche Dauer bzw. Länge der Freilaufphasen (Schubbetrieb des Fahrzeugs), den prozentualen Anteil von Stadtfahrten und/oder Landstraßenfahrten und/oder Autobahnfahrten an der Gesamtfahrstrecke. All diese Profildaten schlagen sich selbstverständlich im durchschnittlichen Kraftstoffverbrauch nieder. Der elektronische Kalender des Fahrers, der Adresszeiten, Terminzeiten und weitere Daten umfassen kann, kann z. B. in einem Bordcomputer und/oder in einem mobilen Endgerät (Smartphone) und/oder in einer Datenwolke gespeichert sein. Die Wetterdaten und/oder das Temperaturprofil entlang der zu fahrenden Strecke und/oder die Verkehrsinformationsdaten können auch beispielsweise im Bordcomputer und/oder in einem mobilen Endgerät und/oder in einer Datenwolke gespeichert sein. Auch die Kraftstoffpreisdaten von in der Umgebung und/oder entlang der geplanten Fahrstrecke befindlichen Tankstellen können beispielsweise im Bordcomputer und/oder in einem mobilen Endgerät und/oder in einer Datenwolke gespeichert sein. Die Kraftstoffpreisdaten können auch über das Internet beziehbar sein. Dabei können die Kraftstoffpreisdaten von Tankstellen in einem Umkreis von vorzugsweise 1 km, weiter vorzugsweise 2 km, weiter vorzugsweise 5 km, weiter vorzugsweise 10 km und höchst vorzugsweise in einem Umkreis von 20 km von der momentanen Position des Kfz oder von der geplanten Fahrstrecke gespeichert sein. Weiterhin können die Kraftstoffpreisdaten von einem einzelnen Tankstellenanbieter und/oder einem Tankstellenanbieter, der Bezahlung mit Tankkarten, die wiederum für einen oder für mehrere Tankstellenanbieter ausgelegt sind, unterstützt, in den oben angegebenen Umkreisen gespeichert sein. Mittels all dieser Daten kann die voraussichtlich in den nächsten Tagen bzw. in den nächsten Wochen notwendige Kraftstoffmenge bestimmt werden, wobei diese Bestimmung in dem Bordcomputer und/oder in einem mobilen Endgerät und/oder in einer entfernten elektronischen Datenverarbeitungseinrichtung erfolgen kann. Diese Bestimmung kann auch in der Tanksteuereinrichtung durchgeführt werden.

Vorzugsweise umfasst der Verfahrensschritt des Ermittelns der in den Kraftfahrzeugtank einzufüllenden Kraftstoffmenge einen Verfahrensschritt zum Ermitteln eines Anfangsfüllstandes des Kraftfahrzeugtanks und einen Verfahrensschritt zum Berechnen der einzufüllenden Kraftstoffmenge unter Verwendung des ermittelten Anfangsfüllstandes des Kraftfahrzeugs.

Die Ermittlung des Anfangsfüllstandes erfolgt üblicherweise über einen Füllstandsensor im Kraftfahrzeugtank. Das entsprechend ausgebildete Verfahren bietet den Vorteil, dass der sich bereits in dem Kraftfahrzeugtank befindliche Kraftstoff zur Berechnung der notwendigen einzufüllenden Kraftstoffmenge berücksichtigt wird, so dass die Menge des mitzuführenden Kraftstoffs nochmals reduziert wird, wodurch das Gewicht des Fahrzeugs und somit auch dessen Kohlenstoffdioxidemissionen während der Fahrt reduziert werden.

Bei dem erfindungsgemäßen Verfahren wird dass das Beenden des Befüllvorganges durch Ausgabe eines Befüllstoppsignals initiiert. Dabei wird das Befüllstoppsignal von der Tanksteuereinrichtung und/oder einem Bordcomputer des Fahrzeugs und/oder einem mobilen Endgerät ausgegeben.

Bei dem erfindungsgemäßen Verfahren wird das Befüllstoppsignal an zumindest einen elektrisch und/oder elektromagnetisch betätigbaren Aktuator übermittelt.

Dabei ist der elektrisch und/oder elektromagnetisch betätigbare Aktuator in und/oder an dem Kraftfahrzeugtank angeordnet. Mittels des Aktuators kann eine Belüftung des Kraftfahrzeugtanks ermöglicht oder unterbunden werden. Ferner kann mittels eines Aktuators auch ein Zufluss von Kraftstoff in den Kraftstoffbehälter unterbunden oder begrenzt werden.

Vorzugsweise ist der mindestens eine Aktuator ein in und/oder an einem Einfüllrohr des Kraftfahrzeugtanks angeordnetes Rückschlagventil. Das Rückschlagventil wird auch als ICV abgekürzt (aus dem englischen für inlet check valve) .

Ein entsprechendes Verfahren, bei dem das Befüllstoppsignal an ein Rückschlagventil gesendet wird, das in einem Einfüllrohr oder an einem Einfüllrohr angeordnet ist, hat zum Vorteil, dass zum Beenden des Befüllvorganges kein Innendruck im Kraftfahrzeugtank aufgebaut werden muss, so dass nach Beenden des Befüllvorganges der Kraftfahrzeugtank im Wesentlichen drucklos ist. Da kein Innendruck aufgebaut wird, dehnt sich der Kraftfahrzeugtank auch nicht aus, so dass die Genauigkeit der Füllmengenbestimmung im Kraftfahrzeugtank erhöht ist. Ferner bietet die Tatsache, dass zum Beenden des Befüllvorganges kein Druck im Kraftfahrzeugtank aufgebaut werden muss, den Vorteil, dass die in den Kraftfahrzeugtank eingefüllte Kraftstoffmenge präziser der in den Kraftfahrzeugtank einzufüllenden Kraftstoffmenge entspricht. Denn das in dem Kraftfahrzeugtank verbleibende Gasvolumen fungiert nicht als komprimierbare Gasfeder. Die Menge des in das Einfüllrohr eingefüllten Kraftstoffs ist sehr genau bestimmbar, so dass die Genauigkeit der eingefüllten Kraftstoffmenge erhöht ist.

Vorzugsweise ist der zumindest eine Aktuator ein zwischen dem Kraftfahrzeugtank und einem Aktivkohlefilter und/oder zwischen dem Aktivkohlefilter und der Atmosphäre angeordnetes Absperrventil. Das Absperrventil wird auch als FTIV abgekürzt (aus dem englischen für fuel tank isolation valve). Wenn das Absperrventil zwischen dem Aktivkohlefilter und der Atmosphäre angeordnet ist, wird dieses auch als OBD-Ventil bezeichnet.

Durch Ansteuern des FTIV und Verwenden des FTIV zum Initiieren der Beendigung des Befüllvorganges werden in einem Kraftfahrzeug, insbesondere in einem PHEV notwendige Bauteile zum Beenden des Befüllvorganges verwendet. Da das FTIV turnusmäßig überprüft wird, beispielsweise während des Betriebs des Kraftfahrzeugs in Prüfzyklen und im Rahmen einer TÜV-Prüfung, wird durch Verwenden des FTIV zum Initiieren einer Beendigung des Befüllvorganges eine erhöhte Betriebssicherheit erreicht.

Weiter vorzugsweise ist der zumindest eine Aktuator ein im Kraftfahrzeugtank angeordnetes Betriebs- und/oder Betankungsentlüftungsventil. Das Betriebs- und/oder Betankungsentlüftungsventil wird auch als FLVV abgekürzt (aus dem englischen für fuel limit venting valve).

Bei Empfang des Befüllstoppsignals wird mittels des FLVV eine Entlüftungsleitung, die üblicherweise über ein Aktivkohlefilter an der Atmosphäre mündet, geschlossen. Durch Übermittlung des Befüllstoppsignals an das FLVV werden zur Entlüftung des Kraftfahrzeugtanks sowieso benötigte Ventile zum Initiieren eines Beendens des Befüllvorganges verwendet. Dies hat zum Vorteil, dass nicht zusätzliche Bauteile in dem Kraftfahrzeugtank verwendet werden müssen, so dass die Komplexität des Kraftfahrzeugtanks reduziert wird.

Ferner wird durch Verwenden eines elektrisch und/oder elektromagnetisch betätigbaren Betriebs- und/oder Betankungsentlüftungsventil erreicht, dass die Betriebsentlüftungsfunktionalität und die Betankungsentlüftungsfunktionalität durch ein einziges Bauteil bereitgestellt werden kann. Bei herkömmlichen aus dem Stand der Technik bekannten Verfahren werden zur Realisierung der Betriebsentlüftungsfunktionalität und der Betankungsentlüftungsfunktionalität zwei separate Ventile benötigt.

Vorzugsweise ist der zumindest eine Aktuator ein in einem Einfüllrohr des Kraftfahrzeugtanks einführbarer Störkörper, so dass das Befüllstoppsignal an den Störkörper übermittelt wird.

Der Störkörper kann beispielsweise in das Einfüllrohr eingeschoben und/oder oder eingeschwenkt werden, so dass sich der freie Querschnitt des Einfüllrohrs verkleinert. Durch Ansteuern des Störkörpers zum Beenden des Befüllvorganges staut sich in das Einfüllrohr eingefüllter Kraftstoff in diesem auf, bis eine Abschaltbohrung des Zapfventils erreicht wird, wodurch der Betankungsvorgang beendet wird. Dies hat zum Vorteil, dass zum Beenden des Befüllvorganges kein Innendruck im Kraftfahrzeugtank aufgebaut werden muss, so dass nach Beenden des Befüllvorganges der Kraftfahrzeugtank im Wesentlichen drucklos ist. Da kein Innendruck aufgebaut wird, dehnt sich der Kraftfahrzeugtank auch nicht aus, so dass die Genauigkeit der Füllmengenbestimmung im Kraftfahrzeugtank erhöht ist. Ferner wird durch die Tatsache, dass zum Beenden des Befüllvorganges kein Druck im Kraftfahrzeugtank aufgebaut werden muss, der Vorteil erzielt, dass die in den Kraftfahrzeugtank eingefüllte Kraftstoffmenge genauer der in den Kraftfahrzeugtank einzufüllenden Kraftstoffmenge entspricht. Denn das in dem Kraftfahrzeugtank verbleibende Gasvolumen fungiert nicht als komprimierbare Gasfeder. Die Menge des in das Einfüllrohr eingefüllten Kraftstoffs ist sehr genau bestimmbar, so dass die Genauigkeit der eingefüllten Kraftstoffmenge erhöht ist.

Vorzugsweise ist der zumindest eine Aktuator ein in einem Einfüllstutzen eingesetzter Elektromagnet, so dass das Befüllstoppsignal an den Elektromagneten übertragbar ist.

Durch Aktivieren des Elektromagneten wird ein Schließen eines in das Einfüllrohr eingeführten Zapfventils bewirkt, wenn das Zapfventil eine entsprechende Funktionalität aufweist. Dies wiederum hat zum Vorteil, dass zum Beenden des Befüllvorganges kein Innendruck im Kraftfahrzeugtank aufgebaut werden muss, so dass nach Beenden des Befüllvorganges der Kraftfahrzeugtank im Wesentlichen drucklos ist. Da kein Innendruck aufgebaut wird, dehnt sich der Kraftfahrzeugtank auch nicht aus, so dass die Genauigkeit der Füllmengenbestimmung im Kraftfahrzeugtank erhöht ist. Da zum Beenden des Befüllvorganges kein Druck im Kraftfahrzeugtank aufgebaut werden muss, entspricht die in den Kraftfahrzeugtank eingefüllte Kraftstoffmenge präziser der in den Kraftfahrzeugtank einzufüllenden Kraftstoffmenge. Denn das in dem Kraftfahrzeugtank verbleibende Gasvolumen fungiert nicht als komprimierbare Gasfeder.

Vorzugsweise ist das erfindungsgemäße Verfahren derart ausgebildet, dass dieses einen Verfahrensschritt zum Etablieren einer weiteren Datenaustauschverbindung zwischen einer fahrzeugseitigen Tanksteuereinrichtung und einer Befülleinrichtung umfasst, wobei der zumindest eine Aktuator in einer Befülleinrichtung angeordnet ist und das Befüllstoppsignal über die weitere Datenaustauschverbindung an den Aktuator gesendet wird.

Die Befülleinrichtung kann eine Zapfanlage einer Tankstelle sein. Insbesondere kann die Befülleinrichtung als Zapfventil einer Zapfanlage ausgebildet sein. Dies hat zum Vorteil, dass zum Beenden des Befüllvorganges kein Innendruck im Kraftfahrzeugtank aufgebaut werden muss, so dass nach Beenden des Befüllvorganges der Kraftfahrzeugtank im Wesentlichen drucklos ist. Da kein Innendruck aufgebaut wird, dehnt sich der Kraftfahrzeugtank auch nicht aus, so dass die Genauigkeit der Füllmengenbestimmung im Kraftfahrzeugtank erhöht ist. Da zum Beenden des Befüllvorganges kein Druck im Kraftfahrzeugtank aufgebaut werden muss, entspricht die in den Kraftfahrzeugtank eingefüllte Kraftstoffmenge präziser der in den Kraftfahrzeugtank einzufüllenden Kraftstoffmenge, da das in dem Kraftfahrzeugtank verbleibende Gasvolumen nicht als komprimierbare Gasfeder fungiert. Die Menge des in das Einfüllrohr eingefüllten Kraftstoffs ist sehr genau bestimmbar, da die Geometrie und die Abmessungen des Einfüllrohrs bekannt sind, so dass die Genauigkeit der eingefüllten Kraftstoffmenge erhöht ist.

Die der vorliegenden Erfindung zugrunde liegende Aufgabe wird auch durch einen Kraftfahrzeugtank mit den Merkmalen des Anspruchs 13 gelöst.

Die Tanksteuereinrichtung kann hierzu eine Datentransceivereinheit umfassen, die dazu ausgebildet ist, über die Datenaustauschverbindung Daten zu empfangen. Die Datentransceivereinheit ist ferner dazu ausgebildet, Daten zu senden. Vorzugsweise können die Daten über die Datenaustauschverbindung von der Datentransceivereinheit gesendet werden. Jedoch ist die vorliegende Erfindung nicht darauf beschränkt, denn die Datentransceivereinheit kann auch Daten über eine von der Datenaustauschverbindung unterschiedliche Datenstrecken versenden.

Der erfindungsgemäße Kraftfahrzeugtank bietet den Vorteil, dass Aktionen wie beispielsweise ein Befüllstart und/oder ein Befüllstopp des Kraftfahrzeugtanks durch eine den elektronischen Datenspeicher umfassende Elektronikeinheit und/oder durch eine Steuerungseinrichtung (beispielsweise ein Bordcomputer des Kfz und/oder ein mobiles Endgerät und/oder die Tanksteuereinrichtung selber) initiierbar sind. Vorzugsweise ist der Kraftfahrzeugtank derart ausgebildet, dass die Tanksteuereinrichtung ferner eine Datenausgabeeinheit umfasst, über die ein Tankstartsignal und/oder ein Tankstoppsignal ausgebbar ist/sind.

Der erfindungsgemäße Kraftfahrzeugtank umfasst zumindest einen elektrisch und/oder elektromagnetisch betätigbaren Aktuator, mittels dem ein Beenden eines Befüllvorganges des Kraftfahrzeugtanks initiierbar ist. Dabei ist die Tanksteuereinrichtung mit dem Aktuator über eine Datenaustauschverbindung verbunden und ferner dazu ausgebildet, an den Aktuator ein Befüllstoppsignal über die Datenaustauschverbindung zu übertragen. Bei Empfang des Befüllstoppsignals initiiert der Aktuator das Beenden des Befüllvorganges.

Ein entsprechend ausgebildeter Kraftfahrzeugtank bietet den Vorteil, dass dieser mit einer geeigneten Kraftstoffmenge befüllt wird, die beispielsweise zum Erreichen eines vorgegebenen Ziels notwendig ist, ohne dass seitens des Fahrers bzw. des Betankers des Kraftfahrzeugtanks Schätzungen hinsichtlich der einzufüllenden Kraftstoffmenge angestellt werden müssen. Somit kann gewährleistet werden, dass genügend Kraftstoff in das Kraftfahrzeug eingefüllt wird, um das vorgegebene Ziel zu erreichen. Jedoch wird nicht zu viel Kraftstoff in den Kraftfahrzeugtank eingeleitet, so dass nur die notwendige Kraftstoffmenge bei den jeweiligen Beschleunigungsvorgängen des Kraftfahrzeugs auch beschleunigt werden, wodurch der Kraftstoffverbrauch des Kraftfahrzeugs und somit auch dessen Kohlendioxidausstoß reduziert werden. Zusammenfassend erhöht der erfindungsgemäße Kraftfahrzeugtank den Tankkomfort, die Sicherheit des Erreichens eines vorgegebenen Ziels und verringert den Kohlenstoffdioxidausstoß eines Kfz.

Weiter vorzugsweise umfasst der Kraftfahrzeugtank einen Füllstandsensor, der mit der Tanksteuereinrichtung über eine zweite Datenaustauschverbindung ist, wobei der Füllstandsensor dazu ausgebildet ist, Daten, die einen mittels des Füllstandsensors ermittelten Füllstand des Kraftfahrzeugtanks repräsentieren, über die zweite Datenaustauschverbindung an die Tanksteuereinrichtung zu übertragen.

Ein entsprechend ausgebildeter Kraftfahrzeugtank bietet den Vorteil, dass dieser für unterschiedliche Ausführungen eines Fahrzeugs verwendet werden kann. So ist es seitens von Kraftfahrzeugherstellern häufig erwünscht, dass ein Kraftfahrzeugtank mit unterschiedlichen maximalen Befüllhöhen realisierbar ist. Hierzu ist es gemäß des Standes der Technik notwendig, unterschiedliche Betriebs- und/oder Betankungsentlüftungsventile vorzusehen, um unterschiedliche Abschalthöhen zu realisieren. Mittels des erfindungsgemäßen Kraftfahrzeugtanks ist eine entsprechende Bevorratung unterschiedlicher Betriebs- und/oder Betankungsentlüftungsventile nicht mehr notwendig, da eine maximale Befüllhöhe des Kraftfahrzeugtanks elektronisch einstellbar ist.

Vorzugsweise ist der Kraftfahrzeugtank derart ausgestaltet, dass dessen Tanksteuereinrichtung dazu ausgebildet ist, zusätzlich zu den von dem Füllstandsensor übertragenen Daten weitere eine Neigung des Kraftfahrzeugtanks repräsentierende Daten zu empfangen. Ferner ist die Tanksteuereinrichtung dazu ausgebildet, mittels der von dem Füllstandsensor übertragenen Daten und der die Neigung des Kraftfahrzeugtanks repräsentierenden Daten einen Ist-Füllstand zu ermitteln. Diese Funktionalität kann auch gewährleistet werden, wenn der Füllstandsensor den Füllstand im Kraftfahrzeugtank lediglich an einer oder an zwei Stellen bestimmt.

Der Ist-Füllstand entspricht dem Füllstand des Kraftfahrzeugtanks (also dem in nominalen Füllstand des Kraftfahrzeugtanks), wenn der Kraftfahrzeugtank keine Neigung aufweist, d.h. wenn das Kfz auf einer Ebene ohne Neigung positioniert ist. Der Zusammenhang zwischen dem Füllstandsensorsignal, den die Neigung des Kraftfahrzeugtanks repräsentierenden Daten und dem tatsächlichen Füllgrad des Kraftfahrzeugtanks (Ist-Füllstand) ist vorzugsweise in einem Korrekturkennfeld gespeichert, das vorzugsweise in der Tanksteuereinrichtung abgespeichert ist.

Die Messung der Raumlage des Kraftfahrzeugs bzw. des Kraftfahrzeugtanks erfolgt vorzugsweise mit einem fahrzeugeigenen Lagesensor. Zum Erzeugen des Korrekturkennfeldes kann der Tank beispielsweise um eine Horizontalachse in 5° Schritten geneigt und der Kraftfahrzeugtank in jeder Schräglage um die Vertikalachse und 360° in 5° Schritten rotiert werden. Dabei wird in jedem dieser Schräglagen- und Rotationspunkten eine Höhen-Volumen-Kennlinie erzeugt und in das Korrekturkennfeld eingetragen. Das Korrekturkennfeld dient dann zur Bestimmung der exakten im Kraftfahrzeugtank befindlichen Kraftstoffmenge. In dem Korrekturfeld können ferner Temperaturvariationen des Kraftstoffes berücksichtigt sein.

Ein entsprechend ausgebildeter Kraftfahrzeugtank bietet den Vorteil, dass der tatsächliche Befüllgrad des Kraftfahrzeugtanks nochmals mit erhöhter Genauigkeit bestimmbar ist, so dass eine erhöhte Sicherheit zum Erreichen eines vorgegebenen Ziels erreicht wird, wobei gleichzeitig gewährleistet wird, dass nicht zu viel Kraftstoff im Kraftfahrzeugtank mitgeführt wird, wodurch das Gewicht des Kraftfahrzeugs und damit dessen Kohlenstoffdioxidausstoß reduziert werden.

Der Kraftfahrzeugtank ist vorzugsweise derart ausgebildet, dass der zumindest eine Aktuator als Betriebs- und/oder Betankungsentlüftungsventil ausgebildet ist, das im Kraftfahrzeugtank angeordnet ist. Dabei ist das Betriebs- und/oder Betankungsentlüftungsventil elektrisch und/oder elektromagnetisch zwischen einer Offenstellung und einer Schließstellung betätigbar/verstellbar, wobei in der Offenstellung des Betriebs- und/oder Betankungsentlüftungsventils der Kraftfahrzeugtank mittels des Betriebs- und/oder Betankungsentlüftungsventils mit einer Entlüftungsleitung fluidverbunden ist, und wobei in der Schließstellung des Betriebs- und/oder Betankungsentlüftungsventils der Kraftfahrzeugtank von der Entlüftungsleitung mittels des Betriebs- und/oder Betankungsentlüftungsventils fluidgetrennt ist.

Die Verwendung des Betriebs- und/oder Betankungsentlüftungsventils zum Beenden eines Befüllvorganges bietet den Vorteil, dass sowieso für den Betrieb des Kraftfahrzeugtanks notwendige Ventileinrichtungen verwendet werden, um den Betankungsvorgang elektrisch und/oder elektromagnetisch zu beenden, so dass nicht weitere Bauteile im Kraftstofftank einzubauen sind, wodurch die Komplexität des entsprechend ausgebildeten Kraftfahrzeugtanks nicht erhöht wird.

Der Kraftfahrzeugtank ist vorzugsweise derart ausgebildet, dass der zumindest eine Aktuator als Rückschlagventil ausgebildet ist, das in einem in den Kraftfahrzeugtank mündenden Einfüllrohr angeordnet ist. Dabei ist das Rückschlagventil elektrisch und/oder elektromagnetisch zwischen einer Offenstellung und einer Schließstellung betätigbar/verstellbar, wobei in der Offenstellung des Rückschlagventils der Kraftfahrzeugtank mit dem Einfüllrohr fluidverbunden ist, und wobei in der Schließstellung des Rückschlagventils der Kraftfahrzeugtank von dem Einfüllrohr mittels des Rückschlagventils fluidgetrennt ist oder die lichte Weite des Einfüllrohrs mittels des Rückschlagventils reduziert ist.

Weiter vorzugsweise ist der Kraftfahrzeugtank derart ausgebildet, dass der zumindest eine Aktuator als Störkörper ausgebildet ist, der in einem in den Kraftfahrzeugtank mündenden Einfüllrohr angeordnet ist, wobei der Störkörper elektrisch und/oder elektromagnetisch zwischen einer Offenstellung und einer Störstellung betätigbar ist, wobei in der Störstellung des Störkörpers eine lichte Weite des Einfüllrohrs nicht reduziert ist, und wobei in der Störstellung des Störkörpers dieser in das Einfüllrohr hineinragt und die lichte Weite des Einfüllrohrs reduziert.

Weiter vorzugsweise ist der Kraftfahrzeugtank derart ausgebildet, dass der zumindest eine Aktuator als Elektromagnet ausgebildet ist, der in einem Einfüllstutzen eines in den Kraftfahrzeugtank mündenden Einfüllrohrs angeordnet ist, wobei der Elektromagnet zwischen einem Aktivzustand und einem Passivzustand betätigbar/verstellbar ist. Durch Aktivieren des Elektromagneten wird ein Schließen eines in das Einfüllrohr eingeführten Zapfventils bewirkt, wenn das Zapfventil entsprechend ausgebildet ist und magnetisch aktivierbar/deaktivierbar ist.

Die drei zuletzt beschriebenen Ausführungen des Kraftfahrzeugtanks bieten den Vorteil, dass zum Beenden des Befüllvorganges kein Innendruck im Kraftfahrzeugtank aufgebaut werden muss, so dass nach Beenden des Befüllvorganges der Kraftfahrzeugtank im Wesentlichen drucklos ist. Da kein Innendruck aufgebaut wird, dehnt sich der Kraftfahrzeugtank auch nicht aus, so dass die Genauigkeit der Füllmengenbestimmung im Kraftfahrzeugtank erhöht ist. Ferner bietet die Tatsache, dass zum Beenden des Befüllvorganges kein Druck im Kraftfahrzeugtank aufgebaut werden muss, den Vorteil, dass die in den Kraftfahrzeugtank eingefüllte Kraftstoffmenge präziser der in den Kraftfahrzeugtank einzufüllenden Kraftstoffmenge entspricht. Denn das in dem Kraftfahrzeugtank verbleibende Gasvolumen fungiert nicht als komprimierbare Gasfeder. Die Menge des in das Einfüllrohr eingefüllten Kraftstoffs ist sehr genau bestimmbar, so dass die Genauigkeit der eingefüllten Kraftstoffmenge erhöht ist.

In einer weiteren bevorzugten Ausführungsform ist der Kraftfahrzeugtank derart ausgebildet, dass der zumindest eine Aktuator als Absperrventil ausgebildet ist, das zwischen dem Kraftfahrzeugtank und einem Aktivkohlefilter oder zwischen einem Aktivkohlefilter und der Atmosphäre angeordnet ist. Das Absperrventil ist elektrisch und/oder elektromagnetisch zwischen einer Offenstellung und einer Schließstellung betätigbar/verstellbar, wobei in der Offenstellung des Absperrventils der Kraftfahrzeugtank mittels des Absperrventils mit dem Aktivkohlefilter bzw. mit der Atmosphäre fluidverbunden ist, und wobei in der Schließstellung des Absperrventils der Kraftfahrzeugtank von dem Aktivkohlefilter beziehungweise von der Atmosphäre mittels des Absperrventils fluidgetrennt ist.

Unter einer elektrischen und/oder elektromagnetischen Verstellbarkeit eines Aktuators ist eine elektromechanische Verstellung des Aktuators zu verstehen.

Die Tanksteuerungseinrichtung kann als separate elektronische Einrichtung ausgebildet sein. Jedoch kann die Tanksteuerungseinrichtung auch als Teil eines Bordcomputersystems des Kraftfahrzeugs ausgebildet sein und eine Untereinheit des Bordcomputersystems darstellen.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine schematische Darstellung eines erfindungsgemäßen Kraftfahrzeugtanks der zur Ausführung des erfindungsgemäßen Verfahrens zum Befüllen des Kraftfahrzeugtanks ausgelegt ist; und
- Figur 2:: eine schematische Schnittdarstellung eines Einfüllrohrs samt Einfüllstutzen eines erfindungsgemäßen Kraftfahrzeugtanks.

In der nun folgenden Beschreibung bezeichnen gleiche Bezugszeichen gleiche Bauteile beziehungsweise gleiche Merkmale, so dass eine in Bezug auf eine Figur durchgeführte Beschreibung bezüglich eines Bauteils auch für die anderen Figuren gilt, so dass eine wiederholende Beschreibung vermieden wird.

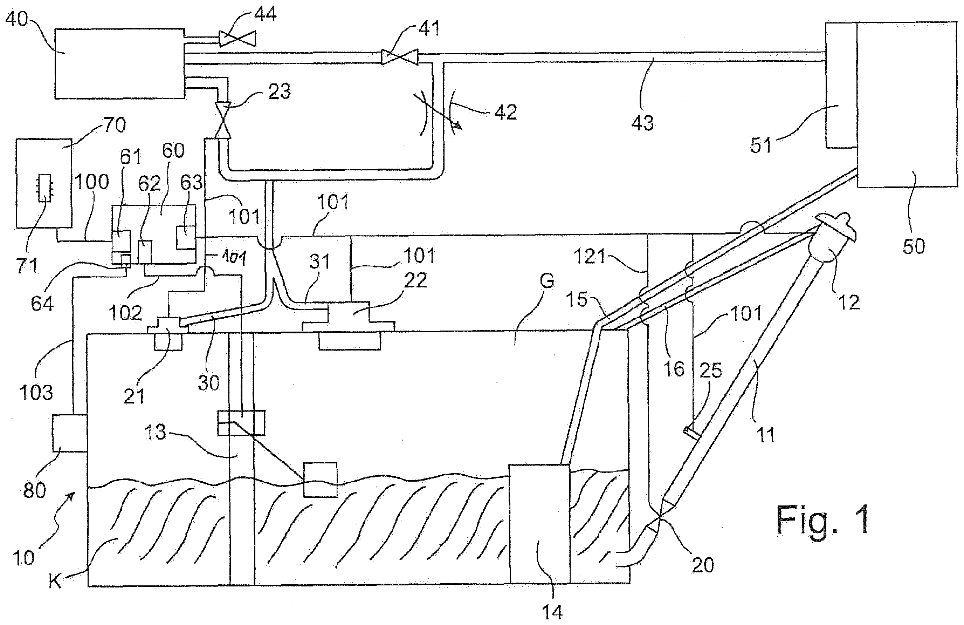

Figur 1 zeigt eine schematische Darstellung eines Kraftfahrzeugtanks 10 der zur Ausführung des erfindungsgemäßen Verfahrens zum Befüllen des Kraftfahrzeugstanks 10 ausgelegt ist. Der Kraftfahrzeugtank 10 beherbergt eine gewisse Menge von Kraftstoff K und darüber hinaus ein Gasvolumen G, das üblicherweise mit Kohlenwasserstoffen gesättigt ist. Zum Einfüllen von Kraftstoff K weist der Kraftfahrzeugtank 10 ein Einfüllrohr 11 auf, an dessen vom Kraftstofftank 10 abgewandten Ende ein Einfüllstutzen 12 angeordnet ist. Weiterhin beherbergt der Kraftfahrzeugtank 10 eine Kraftstofffördereinrichtung 14, die auch als Kraftstoffpumpe 14 bezeichnet wird. Die Kraftstoffpumpe 14 ist über eine Kraftstoffleitung 15 mit einem Motor 50 eines in der Figur nicht dargestellten Kraftfahrzeugs zum Fördern des Kraftstoff K hin zum Motor 50 fluidverbunden. Ferner kann der Kraftfahrzeugtank 10 eine Rezirkulationsleitung 16 umfassen, die mit dem Kraftfahrzeugtank 10 und einem vom Einfüllstutzen 12 umschlossenen Volumen fluidverbunden ist. Die Rezirkulationsleitung 16 dient einen Gasaustausch zwischen dem Kraftfahrzeugtank 10 und dem Einfüllstutzen 12 während eines Betankungsvorgangs des Kraftfahrzeugtanks 10 und ist lediglich optional und üblicherweise für den US-amerikanischen Markt vorgesehen.

Der erfindungsgemäße Kraftfahrzeugtank 10 umfasst eine Tanksteuereinrichtung 60, die eine Datenempfangseinheit 61 umfasst, über die elektronische Daten an die Tanksteuereinrichtung 60 übertragbar sind. Aus Figur 1 ist ersichtlich, dass die Datenempfangseinheit 61 über eine Datenleitung 100 mit einer Elektronikeinheit 70 verbunden ist, so dass eine Datenaustauschverbindung zwischen dem Tanksteuerungseinrichtung 60 und der Elektronikeinheit 70 ermöglicht ist. Die Elektronikeinheit 70 wiederum umfasst einen elektronischen Datenspeicher 71, so dass die in dem elektronischen Datenspeicher 71 gespeicherten Daten über die Datenleitung 100 an die Elektronikeinheit 60 übertragbar sind. Die Datenleitung 100 kann dabei dergestalt sein, dass Daten bidirektional zwischen der Elektronikeinheit 70 und der Tanksteuerungseinrichtung 60 übertragbar sind. Jedoch kann die Datenleitung 100 auch dergestalt sein, dass lediglich Daten von der Elektronikeinheit 70 hin zur Tanksteuereinrichtung 60 übertragbar sind. Die Elektronikeinheit 70 kann beispielsweise ein Bordcomputer 70 des den Kraftfahrzeugtank 10 aufweisenden Kfz sein. Weiterhin kann die Elektronikeinheit 70 aber auch ein mobiles Endgerät 70, beispielsweise ein Smartphone 70 sein. Darüber hinaus ist es auch möglich, dass es sich bei der Elektronikeinheit 70 um eine Datenverarbeitungsanlage 70 handelt, die zur Erzeugung und Bereitstellung einer Datenwolke ausgebildet ist.

Die Datenleitung 100 ermöglicht eine Übertragung von elektrischen Signalen zwischen der Elektronikeinheit 70 und der Tanksteuerungseinrichtung 60. Darüber hinaus ist es auch möglich, dass die Datenleitung 100 derart ausgestaltet ist, dass Daten zwischen der Elektronikeinheit 70 und der Tanksteuerungseinrichtung 60 drahtlos übertragen werden.

Ferner ist aus Figur 1 ersichtlich, dass die Tanksteuerungseinrichtung 60 eine Datenausgabeeinheit 63 umfasst, über die Daten und/oder Signale über eine erste Datenaustauschverbindung 101 an elektrisch und/oder elektromagnetisch betätigbaren Aktuatoren 20, 21, 22, 23, 24, 25 übertragbar sind. Die erste Datenaustauschverbindung 101 kann auch als erste Datenleitung 101 oder als erste Signalleitung 101 oder allgemein als erste elektrische Leitung 101 bezeichnet werden. Die weiter unten noch zu spezifizierenden Aktuatoren 20-25 sind dazu ausgebildet, ein Beenden eines Befüllvorganges des Kraftfahrzeugtanks 10 zu initiieren. Hierzu ist die Tanksteuerungseinrichtung 60 dazu ausgebildet, an einen oder an mehrere der Aktuatoren 20-25 ein Befüllstoppsignal über die Datenaustauschverbindung 101 zu übertragen, so dass bei Empfang des Befüllstoppsignals zumindest einer der Aktuatoren 20-25 auf eine weiter unten zu spezifizieren der Art und Weise ein Beenden des Befüllvorganges initiiert.

In Figur 1 ist der Kraftfahrzeugtank 10 mit Aktuatoren 20-25 dargestellt. Jedoch ist die vorliegende Erfindung nicht derart zu verstehen, dass sämtliche Aktoren Aktuatoren 20-25 notwendig sind, um ein Beenden eines Befüllvorganges des Kraftfahrzeugtanks 10 zu initiieren. Vielmehr kann ein Beenden eines Befüllvorganges des Kraftfahrzeugtanks 10 durch lediglich einen einzigen elektrisch und/oder elektromagnetisch betätigbaren Aktuator 20-25 initiiert werden. Folglich ist die vorliegende Erfindung derart zu verstehen, dass der erfindungsgemäße Kraftfahrzeugtank 10 lediglich auch einen einzigen elektrisch und/oder elektromagnetisch betätigbaren Aktuator 20-25 aufweisen kann. Daher ist Figur 1 so zu verstehen, dass der Kraftfahrzeugtank 10 zumindest einen der elektrisch und/oder elektromagnetisch betätigbaren Aktuatoren 20-25 aufweist. Jedoch kann der Kraftfahrzeugtank 10 auch mehrere der elektrisch und/oder elektromagnetisch betätigbaren Aktuatoren 20-25 aufweisen.

Der erfindungsgemäße Kraftfahrzeugtank 10 ist dazu ausgebildet, eine Datenaustauschverbindung zwischen der Tanksteuerungseinrichtung 60 und dem elektronischen Datenspeicher 71 der Elektronikeinheit 70 zu etablieren. Der erfindungsgemäße Kraftfahrzeugtank 10 ist ferner dazu ausgebildet, eine in den Kraftfahrzeugtank 10 einzufüllende Kraftstoffmenge mittels über die Datenleitung 100 aus dem elektronischen Datenspeicher 71 übertragenen Daten zu ermitteln.

Die Verfahrensschritte des Etablierens der Datenaustauschverbindung und des Ermittelns der in den Kraftfahrzeugtank 10 einzufüllenden Kraftstoffmenge kann von der fahrzeugseitigen Tanksteuereinrichtung 60 und/oder auch von der Elektronikeinheit 70 durchgeführt werden. Die Ermittlung der einzufüllenden Kraftstoffmenge kann auf mannigfaltige Art und Weise erfolgen. So kann beispielsweise die einzufüllende Kraftstoffmenge aus der Elektronikeinheit 70 übertragen werden. Hierzu weist dann die Elektronikeinheit 70 sämtliche notwendigen Informationen auf, um die einzufüllende Kraftstoffmenge zu bestimmen/berechnen. Beispielsweise können in der Elektronikeinheit 70 die Distanz zu einem Zielort und ein durchschnittlicher Kraftstoffverbrauch des Kfz gespeichert sein, so dass aus diesen beiden Größen die einzufüllende Kraftstoffmenge zum Erreichen des Zielorts berechnet werden kann. Diese Berechnung der einzufüllenden Kraftstoffmenge kann aber auch in der Tanksteuereinrichtung 60 erfolgen. Hierzu müssen dann die notwendigen Daten an die Tanksteuereinrichtung 60 übertragen werden.

Das Ermitteln der einzufüllenden Kraftstoffmenge benötigt einen vorangehenden Verfahrensschritt des Ermittelns einer Distanz zu einem vorgegebenen Fahrtziels aus dem elektronischen Datenspeicher 71. Ferner ist ein Verfahrensschritt zum Ermitteln von zumindest einer verbrauchsrelevanten Größe aus dem elektronischen Datenspeicher 71 notwendig. Das Berechnen der einzufüllenden Kraftstoffmenge zur Erreichung des vorgegebenen Fahrtziels wird dann unter Verwendung der ermittelten Distanz und der verbrauchsrelevanten Größe durchgeführt.

Die verbrauchsrelevante Größe kann beispielsweise ausgewählt werden aus Navigationsdaten und/oder einem Höhenprofil und/oder Streckenprofil einer zu fahrenden Strecke, und/oder einem durchschnittlichen Kraftstoffverbrauch des Kfz, und/oder einem Fahrverhalten des Fahrers, und/oder aus Kalendereinträgen in einem elektronischen Kalender des Fahrers, und/oder aus Wetterdaten und/oder einem Temperaturprofil entlang einer zu fahrenden Strecke, und/oder aus Verkehrsinformationsdaten, und/oder aus Informationen über einen Ladezustand einer zum Antrieb des Kraftfahrzeugs vorgesehenen Batterie, und/oder aus Kraftstoffpreisdaten von in der Umgebung und/oder der entlang der zu fahrenden Strecke befindlichen Tankstellen ausgewählt werden.

Ein lediglich beispielhaftes Szenario kann dergestalt sein, dass die Elektronikeinheit 70 Zugriff auf Kalendereinträge des Fahrers hat, wobei die Kalendereinträge sowohl Ort als auch Zeit von Terminen des Fahrers umfasst. Die Kalendereinträge können z.B. in einem Smartphone des Fahrers gespeichert sein. Unter Berücksichtigung dieser Kalendereinträge werden dann zu fahrende Strecken im Vorfeld berechnet, wobei bei den zu fahrenden Strecken zum Erreichen unterschiedlicher Zielorte Verkehrsinformationsdaten verwendet werden, um etwaige Umgehungsstrecken zum Umfahren eines Staus zu berücksichtigen. Ferner können Höhenprofile der zu fahrenden Strecken berücksichtigt werden, so dass ein Verbrauch unter Berücksichtigung der zu fahrenden Strecke und beispielsweise eines Höhenprofils im Voraus berechnet werden kann. Unter Berücksichtigung dieser Daten wird dann eine benötigte Kraftstoffmenge berechnet, die dann der Tanksteuereinrichtung 60 über die Datenleitung 100 übertragen wird.

Die vorliegende Erfindung ist jedoch nicht auf dieses Szenario beschränkt, sondern sämtliche oben aufgeführten verbrauchsrelevanten Größen können zur Bestimmung einer benötigten Kraftstoffmenge herangezogen werden und miteinander kombiniert werden.

Nachdem die in den Kraftfahrzeugtank 10 einzufüllende Kraftstoffmenge an die Tanksteuerungseinrichtung 60 übertragen wurde, wird ein Befüllstartsignal entweder von der Tanksteuerungseinrichtung 60 und/oder von der Elektronikeinheit 70 ausgegeben, wodurch ein Befüllvorgang des Kraftfahrzeugtanks 10 initiiert wird. Nachdem die in den Kraftfahrzeugtank 10 einzufüllende Kraftstoffmenge eingefüllt wurde, wird entweder von der Tanksteuerungseinrichtung 60 und/oder von der Elektronikeinheit 70 ein Befüllstoppsignal ausgegeben, wodurch ein Beenden des Befüllvorganges initiiert wird.

Gemäß einer ersten Ausführungsform der vorliegenden Erfindung ist der elektrisch und/oder elektromagnetisch betätigbare Aktuator 22 als Betankungsentlüftungsventil 22 ausgebildet, das im Kraftfahrzeugtank 10 angeordnet ist. In dem dargestellten Ausführungsbeispiel ist das Betriebsentlüftungsventil 21 während der Betankung verschlossen. Bei Empfang eines Befüllstoppsignals, das von der Tanksteuereinrichtung 60 über die Datenausgabeeinheit 63 an das Betankungsentlüftungsventil 22 ausgegeben wird, schließt dieses Ventil, so dass ein Entlüften des Kraftfahrzeugtanks 10 während des Betankungsvorganges unterbunden wird. Durch weiteres Einleiten von Kraftstoff über das Einfüllrohr 11 in den Kraftfahrzeugtank 10 steigt der Tankinnendruck, so dass in das Einfüllrohr 11 eingeleiteter Kraftstoff in dem Einfüllrohr 11 ansteigt, bis der Kraftstoff eine Abschaltbohrung eines eingesetzten Zapfventils (in der Figur nicht dargestellt) erreicht, wodurch der Befüllvorgang beendet wird.

Das Betankungsentlüftungsventil 22 ist elektrisch und/oder elektromagnetisch zwischen einer Offenstellung und einer Schließstellung betätigbar/verstellbar, wobei in dessen Offenstellung der Kraftfahrzeugtank 10 über das Betankungsentlüftungsventil 22 mit der Atmosphäre fluidverbunden ist, und wobei in der Schließstellung Betankungsentlüftungsventils 22 der Kraftfahrzeugtank 10 von der Atmosphäre fluidgetrennt ist.

In Figur 1 ist dargestellt, dass die Fluidverbindung des Kraftfahrzeugtanks 10 zur Atmosphäre über einen Aktivkohlefilter 40 und einen Auslassventil 41 bzw. ein Diagnoseventil 43 erfolgt, jedoch ist das Aktivkohlefilter 40 für die vorliegende Erfindung nicht obligatorisch sondern optional.

In einer zweiten Ausführungsform der vorliegenden Erfindung weist der Kraftfahrzeugtank 10 ein Aktivkohlefilter 40 auf, das über ein Absperrventil 23 mit dem Betriebsentlüftungsventil 21 und dem Betankungsentlüftungsventil 22 und somit dem Kraftfahrzeugtank 10 fluidverbunden ist. Bei dem dargestellten Ausführungsbeispiel müssen das Betriebsentlüftungsventil 21 und das Betankungsentlüftungsventil 22 nicht notwendigerweise elektrisch und/oder elektromagnetisch betätigbar sein, sondern lediglich das Absperrventil 23 muss elektrisch und/oder elektromagnetisch betätigbar sein. Jedoch ist es selbstverständlich auch möglich, dass auch bei dem zweiten Ausführungsbeispiel der vorliegenden Erfindung das Betriebsentlüftungsventil 21 und auch das Betankungsentlüftungsventil 22 neben dem Absperrventil 23 elektrisch und/oder elektromagnetisch betätigbar sind.

Das Absperrventil 23 ist zwischen dem Kraftfahrzeugtank 10 und dem Aktivkohlefilter 40 angeordnet und elektrisch und/oder elektromagnetisch zwischen einer Offenstellung und einer Schließstellung betätigbar/verstellbar, wobei in der Offenstellung des Absperrventils 23 der Kraftfahrzeugtank 10 mittels des Absperrventil 23 mit dem Aktivkohlefilter 40 fluidverbunden ist, und wobei in der Schließstellung des Absperrventils 23 der Kraftfahrzeugtank 10 von dem Aktivkohlefilter 40 mittels des Absperrventils 23 fluidgetrennt ist. Bei Empfang eines Befüllstoppsignals, dass von der Datenausgabeeinheit 63 der Tanksteuereinrichtung 60 an das Absperrventil 23 über die erste Datenaustauschverbindung 101 übertragen wird, schließt das Absperrventil 23, so dass eine Entlüftung des Kraftstoffbehälters 10 während des Betankungsvorganges unterbunden wird, so dass durch Einfüllen von Kraftstoff über das Einfüllrohr 11 in den Kraftfahrzeugtank 10 dessen Innendruck ansteigt. Durch weiteres Einleiten von Kraftstoff in das Einfüllrohr 11 steigt der Kraftstoff in dem Einfüllrohr 11 an, bis eine Abschaltbohrung eines in der Figur nicht dargestellten Zapfventils erreicht wird, woraufhin der Befüllvorgang beendet wird.

In einer dritten Ausführungsform der vorliegenden Erfindung ist der Aktuator 20 als ein Rückschlagventil 20 ausgebildet, das in dem Einfüllrohr 11 angeordnet ist. Das Rückschlagventil 20 ist elektrisch und/oder elektromagnetisch zwischen einer Offenstellung und einer Schließstellung betätigbar, wobei in der Offenstellung des Rückschlagventils 20 der Kraftfahrzeugtank 10 mit dem Einfüllrohr 11 fluidverbunden ist, und wobei in der Schließstellung des Rückschlagventils 20 der Kraftfahrzeugtank 10 von dem Einfüllrohr 11 mittels des Rückschlagventils 20 fluidgetrennt ist oder zumindest die lichte Weite des Einfüllrohrs 11 mittels des Rückschlagventils 20 reduziert ist.

Bei Empfang eines Befüllstoppsignals, das von der Datenausgabeeinheit 63 der Tanksteuerungseinrichtung 60 über die erste Datenaustauschverbindung 101 an das Rückschlagventil 20 ausgegeben wird, wird das Rückschlagventil 20 in dessen Schließstellung überführt, woraufhin in das Einfüllrohr 11 eingeleiteter Kraftstoff nicht mehr oder lediglich verlangsamt in den Kraftfahrzeugtank 10 eingeleitet werden kann. Durch weiteres Einleiten von Kraftstoff in das Einfüllrohr 11 steigt der Kraftstoff in dem Einfüllrohr 11 an, bis eine Abschaltbohrung eines in der Figur nicht dargestellten Zapfventils erreicht wird, woraufhin der Befüllvorgang beendet wird.

Ein entsprechend ausgebildeter Kraftfahrzeugtank 10 bietet den Vorteil, dass zum Beenden des Befüllvorganges kein Druck innerhalb des Kraftfahrzeugtanks 10 aufgebaut werden muss, so dass nach Beenden des Befüllvorganges der Kraftstofftank 10 im Wesentlichen drucklos ist. Dadurch wird eine Beladung eines eventuell vorgesehenen Aktivkohlefilters 40 reduziert. Darüber hinaus ist auch die Bestimmung einer Kraftstoffmenge im Kraftfahrzeugtank 10 mit einer erhöhten Genauigkeit möglich, da aufgrund der unterbleibenden Druckbeaufschlagung des Kraftfahrzeugtanks 10 keine oder eine verminderte Deformation des Kraftfahrzeugtanks 10 erreicht wird.

Gemäß einer vierten Ausführungsform der vorliegenden Erfindung ist der zumindest eine elektrisch und/oder elektromagnetisch betätigbare Aktuator 25 als ein Störkörper 25 ausgebildet, der im Einfüllrohr 11 angeordnet ist. Der Störkörper 25 ist dabei zwischen einer Offenstellung und einer Störstellung elektrisch und/oder elektromagnetisch betätigbar/verstellbar, wobei in der Offenstellung des Störkörpers 25 die lichte Weite des Einfüllrohrs 11 nicht reduziert ist, und wobei in der Störstellung des Störkörpers 25 dieser in das Einfüllrohr 11 hineinragt und somit die lichte Weite des Einfüllrohrs 11 reduziert.

Bei Empfang eines Befüllstoppsignals, das von der Datenausgabeeinheit 63 der Tanksteuerungseinrichtung 60 über die erste Datenaustauschverbindung 101 an den Störkörper 25 ausgegeben wird, wird der Störkörper 25 in dessen Schließstellung überführt, woraufhin in das Einfüllrohr 11 eingeleiteter Kraftstoff nicht mehr oder mit einer verminderten Geschwindigkeit in den Kraftfahrzeugtank 10 eingeleitet werden kann. Durch weiteres Einleiten von Kraftstoff in das Einfüllrohr 11 steigt der Kraftstoff in dem Einfüllrohr 11 an, bis eine Abschaltbohrung eines in der Figur nicht dargestellten Zapfventils erreicht wird, woraufhin der Befüllvorgang beendet wird.

Ein entsprechend ausgebildeter Kraftfahrzeugtank 10 bietet den Vorteil, dass zum Beenden des Befüllvorganges kein Druck innerhalb des Kraftfahrzeugtanks 10 aufgebaut werden muss, so dass nach Beenden des Befüllvorganges der Kraftstofftank 10 im Wesentlichen drucklos ist. Dadurch wird eine Beladung eines eventuell vorgesehenen Aktivkohlefilters 40 reduziert. Darüber hinaus ist auch die Bestimmung einer Kraftstoffmenge im Kraftfahrzeugtank 10 mit einer erhöhten Genauigkeit möglich, da aufgrund der unterbleibenden Druckbeaufschlagung des Kraftfahrzeugtanks 10 keine oder eine verminderte Deformation des Kraftfahrzeugtanks 10 erreicht wird.

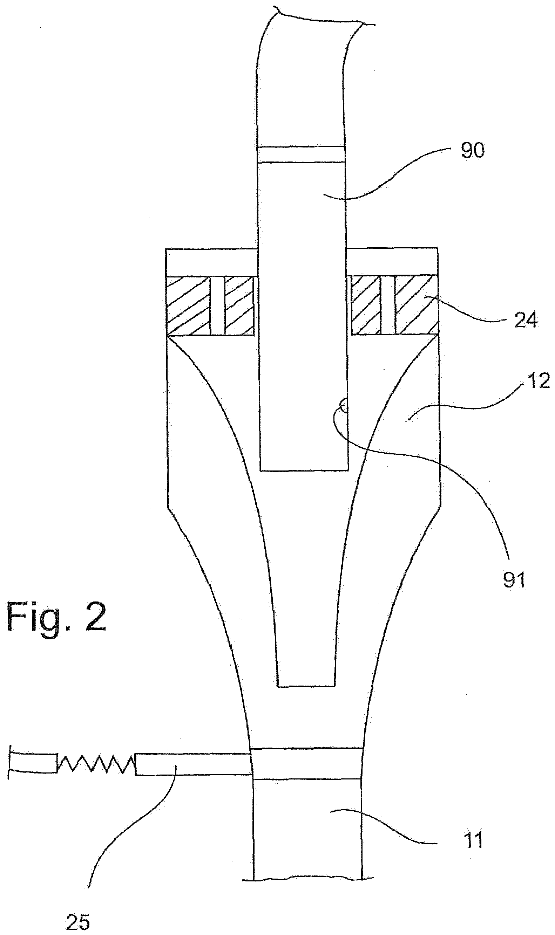

In Figur 2 ist im schematischen Querschnitt ein Einfüllstutzen 12 samt Einfüllrohr 11 eines Kraftfahrzeugtanks 10 gemäß einer fünften Ausführungsform der vorliegenden Erfindung dargestellt. Bei dem Kraftfahrzeugtank 10 gemäß der fünften Ausführungsform der vorliegenden Erfindung ist der zumindest eine Aktuator 24 als ein Elektromagnet 24 ausgebildet, der im Einfüllstutzen 12 angeordnet ist. Bei dem dargestellten Ausführungsbeispiel ist der Elektromagnet 24 in Form eines Ringmagneten 24 ausgebildet. Der Elektromagnet 24 ist dabei zwischen einem Aktivzustand und einem Passivzustand betätigbar, wobei im Aktivzustand der Elektromagnet 24 ein Magnetfeld erzeugt, und wobei der Elektromagnet 24 im Passivzustand kein Magnetfeld erzeugt.

Durch Übertragen eines Befüllstoppsignals von der Datenausgabeeinheit 63 der Tanksteuereinrichtung 60 an den Elektromagneten 24 wird dieser in dessen Passivzustand überführt, so dass kein Magnetfeld erzeugt wird und folglich ein in den Einfüllstutzen 12 eingeführtes Zapfventil 80 verschlossen wird. Ein entsprechend ausgebildeter Kraftfahrzeugtank 10 bietet den Vorteil, dass zum Beenden eines Befüllvorganges kein Druckaufbau innerhalb des Kraftfahrzeugtanks 10 notwendig ist, so dass zum einen ein optional bereitgestelltes Aktivkohlefilter 40 weniger stark beladen wird und darüber hinaus keine Deformation des Kraftfahrzeugtanks 10 durch Druckbeaufschlagung erfolgt, wodurch eine erhöhte Genauigkeit der Bestimmung eines Befüllzustandes des Kraftfahrzeugtanks 10 ermöglicht ist. Darüber hinaus bietet der Kraftfahrzeugtank 10 gemäß der fünften Ausführungsform den Vorteil, dass zum Beenden des Befüllvorganges noch nicht einmal das Einfüllrohr 11 mit Kraftstoff befüllt werden muss, so dass ein sehr zielgenauer Befüllstoppsignal erreichbar ist.

Aus Figur 1 ist ersichtlich, dass der Kraftfahrzeugtank 10 ferner einen Füllstandsensor 13 umfassen kann, der mit der Tanksteuereinrichtung 60 über eine zweite Datenaustauschverbindung 102 in Form einer Datenleitung 102 verbunden ist. Zur Übertragung der Daten von dem Füllstandsensor 13 an die Tanksteuereinrichtung 60 umfasst diese eine zweite Datenempfangseinheit 62. Der Füllstandsensor 13 ist dabei dazu ausgebildet, Daten, die einen mittels des Füllstandsensors 13 ermittelten Füllstand des Kraftfahrzeugtanks 10 repräsentieren, über die zweite Datenaustauschverbindung 102 an die Tanksteuereinrichtung 60 zu übertragen.

Somit kann die in den Kraftfahrzeugtank 10 eingefüllte Menge von Kraftstoff K in Echtzeit überprüft werden und durch die Tanksteuereinrichtung 60 bewertet werden, wobei nach Erreichen der einzufüllenden Kraftstoffmenge das Befüllstoppsignal an zumindest einen der Aktuatoren 20-25 ausgegeben wird, woraufhin der Befüllvorgang beendet wird.

Aus Figur 1 ist ersichtlich, dass der Kraftfahrzeugtank 10 ferner einen Neigungssensor 80 zum Bestimmen einer Neigung des Kraftfahrzeugtanks 10 umfasst. Der Neigungssensor 80 ist dabei mit der Tanksteuereinrichtung 60 über eine dritte Datenaustauschverbindung 103 in Form einer dritten Datenleitung 103 verbunden, wobei die dritte Datenleitung 103 mit einer dritten Empfangseinheit 64 der Tanksteuereinrichtung 60 verbunden ist. Der Neigungssensor 80 ist dazu ausgebildet, über die von diesem ermittelte und die Neigung des Kraftfahrzeugtanks 10 repräsentierende Daten an die Tanksteuereinrichtung 60 zu übertragen.

Die Tanksteuereinrichtung 60 ist dabei dazu ausgebildet, zusätzlich zu den vom Füllstandsensor 13 übertragenen Daten die von dem Neigungssensor 80 übertragenen Daten zu empfangen und einen Ist-Füllstand des Kraftfahrzeugtanks 10 unter Berücksichtigung der Daten des Füllstandsensors 13 und des Neigungssensors 80 zu ermitteln. Somit wird die Bestimmung des Füllstandes des Kraftfahrzeugtanks 10 nochmals präziser ermöglicht, da eine Schrägstellung des Kraftfahrzeugs und somit des Kraftfahrzeugtanks 10 berücksichtigt werden kann.

Der Kraftfahrzeugtank 10 muss zur Berücksichtigung einer Raumlage bzw. Neigung des Kraftfahrzeugtanks 10 nicht notwendigerweise den Neigungssensor 80 aufweisen, da üblicherweise in einer Bordelektronik eines Kraftfahrzeugs ein Neigungssensor vorhanden ist, dessen Daten in die dritte Datenempfangseinheit 64 der Tanksteuereinrichtung 60 übertragbar sind.

Bei dem in Figur 1 dargestellten Kraftfahrzeugtank 10 ist der Aktivkohlefilter 40 über ein Auslassventil 41 und eine Spülleitung 43 mit einem Ansaugtrakt 51 des Motors 50 fluidverbunden. Somit ist eine Spülung des Aktivkohlefilters 40 durch Ansaugluft des Motors 50 ermöglicht. Ferner ist aus Figur 1 ersichtlich, dass die Betriebsentlüftungsleitung 30 und die Betankungsentlüftungsleitung 31 über ein Drosselventil 42 mit dem Ansaugtrakt 51 des Motors 50 fluidverbunden sind. Somit ist es ermöglicht, unter Druck stehendes Gas aus dem Kraftstoffbehälter 10 direkt in den Ansaugtrakt 51 über das Drosselventil 42 und die Spülleitung 43 zu leiten, so dass das mit Kohlenwasserstoffen gesättigte Gas direkt zur Verbrennung innerhalb des Motors 50 verwendet werden kann.

Durch das erfindungsgemäße Verfahren und durch den erfindungsgemäßen Kraftfahrzeugtank 10 wird erreicht, dass der Kraftfahrzeugtank 10 mit einer geeigneten Kraftstoffmenge befüllt wird, die beispielsweise zum Erreichen eines vorgegebenen Ziels notwendig ist, ohne dass seitens des Fahrers bzw. des Betanker des Kraftfahrzeugtanks 10 Schätzungen hinsichtlich der einzufüllenden Kraftstoffmenge angestellt werden müssen. Somit kann gewährleistet werden, dass genügend Kraftstoff K in den Kraftfahrzeugtank 10 eingefüllt wird, um das vorgegebene Ziel bzw. um vorgegebene Ziele zu erreichen. Dabei werden unterschiedlichste verbrauchsrelevante Größen herangezogen, so dass die einzufüllende Kraftstoffmenge mit einer sehr hohen Genauigkeit bestimmt werden kann. Weiterhin bietet das erfindungsgemäße Verfahren und der erfindungsgemäße Kraftfahrzeugtank 10 den Vorteil, dass nicht zu viel Kraftstoff in den Kraftfahrzeugtank 10 eingeleitet wird, so dass zum einen eine Alterung des Kraftstoffs K innerhalb des Kraftfahrzeugtanks 10 vermindert wird, und darüber hinaus auch nicht benötigter Kraftstoff bei Beschleunigungsvorgängen des Kraftfahrzeugs mit beschleunigt werden muss, so dass dadurch der Verbrauch und somit der Kohlenstoffdioxidausstoß das Kraftfahrzeugzeugs reduziert werden.

### Bezugszeichenliste:

10 Kraftfahrzeugtank
11 Einfüllrohr (des Kraftfahrzeugtanks)
12 Einfüllstutzen
13 Füllstandsensor
14 Kraftstofffördereinrichtung / Kraftstoffpumpe
15 Kraftstoffleitung
16 Rezirkulationsleitung
20 Aktuator / Rückschlagventil
21 Aktuator / Betriebsentlüftungsventil
22 Aktuator / Betankungsentlüftungsventil
23 Aktuator / Absperrventil / FTIV
24 Aktuator / Elektromagnet (innerhalb des Einfüllstutzens)
25 Aktuator / Störkörper (innerhalb des Einfüllstutzens)
30 Betriebsentlüftungsleitung
31 Betankungsentlüftungsleitung
40 Aktivkohlefilter
41 Auslassventil / Purge-Ventil
42 Drosselventil
43 Spülleitung
44 Diagnoseventil / OBD-Ventil
50 Motor
51 Ansaugtrakt (des Motors)
60 Tanksteuereinrichtung / Tanksteuerungseinrichtung (des Kraftfahrzeugtanks)
61 (erste) Datenempfangseinheit (der Tanksteuereinrichtung)
62 (zweite) Datenempfangseinheit (der Tanksteuereinrichtung)
63 Datenausgabeeinheit
64 (dritte) Datenempfangseinheit (de Tanksteuereinrichtung)
70 Elektronikeinheit / Bordcomputer / mobiles Endgerät / Datenverarbeitungsanlage (zur Erzeugung und Bereitstellung einer Datenwolke)
71 elektronischer Datenspeicher (der Elektronikeinheit) 80 Neigungssensor
90 Zapfventil
91 Abschaltbohrung
100 Datenleitung (zwischen Elektronikeinheit und Tanksteuereinrichtung)
101 (erste) Datenaustauschverbindung / Datenleitung / Signalleitung / elektrische Leitung
102 (zweite) Datenaustauschverbindung / Datenleitung / Signalleitung / elektrische Leitung
103 (dritte) Datenaustauschverbindung / Datenleitung / Signalleitung / elektrische Leitung
G Gasvolumen (im Kraftfahrzeugtank)
K Kraftstoff (im Kraftfahrzeugtank)

## Patentansprüche

1. Verfahren zum Befüllen eines Kraftfahrzeugtanks (10), umfassend die folgenden Verfahrensschritte:
- Etablieren einer Datenaustauschverbindung zwischen einer fahrzeugseitigen Tanksteuereinrichtung (60) und einem elektronischen Datenspeicher (71);
- Ermitteln einer in den Kraftfahrzeugtank (10) einzufüllenden Kraftstoffmenge mittels über die Datenaustauschverbindung aus dem elektronischen Datenspeicher (71) übertragener Daten;
- Starten eines Befüllvorganges; und
- Beenden des Befüllvorganges nach Erreichen der einzufüllenden Kraftstoffmenge,
wobei das Verfahren durch folgende Verfahrensschritte **gekennzeichnet** ist:
- das Starten des Befüllvorganges ist mittels der Tanksteuereinrichtung (60) und/oder einer den elektronischen Datenspeicher (71) umfassenden Elektronikeinheit (70) initiierbar;
- das Beenden des Befüllvorganges wird durch Ausgabe eines Befüllstoppsignals initiiert; und
- das Befüllstoppsignal wird an zumindest einen elektrisch und/oder elektromagnetisch betätigbaren Aktuator (20, 21, 22, 23, 24, 25, 44) übermittelt.

2. Verfahren nach Anspruch 1, **dadurch gekennzeichnet, dass** das Beenden des Befüllvorganges mittels der Tanksteuereinrichtung (60) und/oder einer den elektronischen Datenspeicher (71) umfassenden Elektronikeinheit (70) initiiert wird.

3. Verfahren nach einem der vorhergehenden Ansprüche, **dadurch gekennzeichnet, dass** das Verfahren einen Verfahrensschritt zum Ermitteln der während des Betankungsvorganges eingefüllten Kraftstoffmenge umfasst.

4. Verfahren nach einem der vorhergehenden Ansprüche, **dadurch gekennzeichnet, dass** der Verfahrensschritt des Ermittelns der in den Kraftfahrzeugtank (10) einzufüllenden Kraftstoffmenge folgende Verfahrensschritte umfasst:
- Ermitteln einer Distanz zu einem vorgegebenem Fahrtziel aus dem elektronischen Datenspeicher (71);
- Ermitteln von zumindest einer verbrauchsrelevanten Größe aus dem elektronischen Datenspeicher (71); und
- Berechnen der einzufüllenden Kraftstoffmenge zur Erreichung des vorgegebenen Fahrtziels unter Verwendung der ermittelten Distanz und der verbrauchsrelevanten Größe.

5. Verfahren nach Anspruch 4, **dadurch gekennzeichnet, dass** die zumindest eine verbrauchsrelevante Größe ausgewählt ist aus einer der folgenden Größen:
- Navigationsdaten, und/oder
- Höhenprofil und/oder Streckenprofil einer zu fahrenden Strecke, und/oder
- durchschnittlicher Kraftstoffverbrauch, und/oder
- Fahrprofil des Fahrers, und/oder
- regelmäßige Verbrauchsverhaltensmuster des Fahrers, und/oder
- Kalendereinträge in einem elektronischen Kalender des Fahrers, und/oder
- Wetterdaten, und/oder
- Temperaturprofil entlang einer zu fahrenden Strecke, und/oder
- Verkehrsinformationsdaten, und/oder
- Information über den Ladezustand einer zum Antrieb des Kraftfahrzeugs vorgesehenen Batterie, und/oder
- Kraftstoffpreisdaten von in der Umgebung und/oder der entlang der zu fahrenden Strecke befindlichen Tankstellen, und/oder
- in den Betriebsflüssigkeitsbehälter eingefüllte Kraftstoffart.

6. Verfahren nach einem der vorhergehenden Ansprüche, **dadurch gekennzeichnet, dass** der Verfahrensschritt des Ermittelns der in den Kraftfahrzeugtank (10) einzufüllenden Kraftstoffmenge folgende Verfahrensschritte umfasst:
- Ermitteln eines Anfangsfüllstandes des Kraftfahrzeugtanks (10); und
- Berechnen der einzufüllenden Kraftstoffmenge unter Verwendung des ermittelten Anfangsfüllstandes des Kraftfahrzeugtanks (10).

7. Verfahren nach einem der vorhergehenden Ansprüche, **dadurch gekennzeichnet, dass** der zumindest eine Aktuator (20) ein in und/oder an einem Einfüllrohr (11) des Kraftfahrzeugtanks angeordnetes Rückschlagventil (20) ist.

8. Verfahren nach einem der vorhergehenden Ansprüche, **dadurch gekennzeichnet, dass** der zumindest eine Aktuator (23, 44) ein zwischen dem Kraftfahrzeugtank (10) und einem Aktivkohlefilter (40) und/oder zwischen dem Aktivkohlefilter (40) und der Atmosphäre angeordnetes Absperrventil (23, 44) ist.

9. Verfahren nach einem der vorhergehenden Ansprüche, **dadurch gekennzeichnet, dass** der zumindest eine Aktuator (21, 22) ein im Kraftfahrzeugtank (10) angeordnetes Betriebs- und/oder Betankungsentlüftungsventil (21, 22) ist.

10. Verfahren nach einem der vorhergehenden Ansprüche, **dadurch gekennzeichnet, dass** der zumindest eine Aktuator (25) ein in ein Einfüllrohr (11) des Kraftfahrzeugtanks (10) einführbarer Störkörper (25) ist.

11. Verfahren nach einem der vorhergehenden Ansprüche, **dadurch gekennzeichnet, dass** der zumindest eine Aktuator (24) ein in einem Einfüllstutzen (12) eingesetzter Elektromagnet (24) ist.

12. Verfahren nach einem der vorhergehenden Ansprüche, **dadurch gekennzeichnet, dass** Verfahren ferner einen Verfahrensschritt zum Etablieren einer weiteren Datenaustauschverbindung zwischen einer fahrzeugseitigen Tanksteuereinrichtung (60) und einer Befülleinrichtung umfasst, wobei der zumindest eine Aktuator in einer Befülleinrichtung angeordnet ist und das Befüllstoppsignal über die weitere Datenaustauschverbindung an den Aktuator gesendet wird.

13. Kraftfahrzeugtank (10), wobei dieser eine Tanksteuereinrichtung (60) mit einer Datenempfangseinheit (61) umfasst, über die in einem elektronischen Datenspeicher (71) gespeicherte Daten an die Tanksteuereinrichtung (60) übertragbar sind, wobei der Kraftfahrzeugtank (10) durch folgende Merkmale **gekennzeichnet** ist:
- der Kraftfahrzeugtank (10) umfasst zumindest einen elektrisch und/oder elektromagnetisch betätigbaren Aktuator (20, 21, 22, 23, 24, 25), mittels dem ein Beenden eines Befüllvorganges des Kraftfahrzeugtanks (10) initiierbar ist;
- die Tanksteuereinrichtung (60) ist mit dem Aktuator (20, 21, 22, 23, 24, 25) über eine Datenaustauschverbindung (101) verbunden;
- die Tanksteuereinrichtung (60) ist dazu ausgebildet, an den Aktuator (20, 21, 22, 23, 24, 25) ein Tankstoppsignal über die Datenaustauschverbindung (101) zu übertragen; und
- bei Empfang des Tankstoppsignals initiiert der Aktuator (20, 21, 22, 23, 24, 25) das Beenden des Befüllvorganges; und
- die Tanksteuereinrichtung (60) ist dazu angepasst, die in den Ansprüchen 1 bis 12 angegebenen Verfahrensschritte auszuführen.

14. Kraftfahrzeugtank (10) nach Anspruch 13, **dadurch gekennzeichnet, dass** die Tanksteuereinrichtung (60) ferner eine Datenausgabeeinheit (63) umfasst, über die ein Tankstartsignal und/oder ein Tankstoppsignal ausgebbar ist/sind.

15. Kraftfahrzeugtank (10) nach Anspruch 13 oder 14, **gekennzeichnet durch** die folgenden Merkmale:
- der Kraftfahrzeugtank (10) umfasst einen Füllstandsensor (13) und/oder einen Temperatursensor;
- der Füllstandsensor (13) und/oder der Temperatursensor ist mit der Tanksteuereinrichtung (60) über eine zweite Datenaustauschverbindung (102) verbunden; und
- der Füllstandsensor (13) ist dazu ausgebildet, Daten, die einen mittels des Füllstandsensors (13) ermittelten Füllstand des Kraftfahrzeugtanks (10) repräsentieren, und/oder mittels des Temperatursensors ermittelt sind, über die zweite Datenaustauschverbindung (102) an die Tanksteuereinrichtung (60) zu übertragen.

16. Kraftfahrzeugtank (10) nach Anspruch 15, **gekennzeichnet durch** die folgenden Merkmale:
- die Tanksteuereinrichtung (60) ist dazu ausgebildet, zusätzlich zu den von dem Füllstandsensor (13) übertragenen Daten weitere eine Neigung des Kraftfahrzeugtanks (10) repräsentierende Daten zu empfangen; und
- die Tanksteuereinrichtung (60) ist dazu ausgebildet, mittels der von dem Füllstandsensor (13) übertragenen Daten und der die Neigung des Kraftfahrzeugtanks (10) repräsentierenden Daten einen Ist-Füllstand zu ermitteln.

17. Kraftfahrzeugtank (10) nach Anspruch 16, **gekennzeichnet durch** die folgenden Merkmale:
- der Kraftfahrzeugtank (10) umfasst einen Neigungssensor (80), mittels dem die Neigung des Kraftfahrzeugtanks (10) bestimmbar ist; und
- der Neigungssensor (80) ist mit der Tanksteuereinrichtung (60) über eine dritte Datenaustauschverbindung (103) verbunden, über die von dem Neigungssensor (80) ermittelte und die Neigung des Kraftfahrzeugtanks (10) repräsentierende Daten an die Tanksteuereinrichtung (60) übertragbar sind.

18. Kraftfahrzeugtank (10) nach einem der Ansprüche 13 bis 17, **gekennzeichnet durch** die folgenden Merkmale:
- der zumindest eine Aktuator (21, 22) ist als ein Betriebs- und/oder Betankungsentlüftungsventil (21, 22) ausgebildet, das im Kraftfahrzeugtank (10) angeordnet ist;
- das Betriebs- und/oder Betankungsentlüftungsventil (21, 22) ist elektrisch und/oder elektromagnetisch zwischen einer Offenstellung und einer Schließstellung betätigbar;
- in der Offenstellung des Betriebs- und/oder Betankungsentlüftungsventils (21, 22) ist der Kraftfahrzeugtank (10) mittels des Betriebs- und/oder Betankungsentlüftungsventils (21, 22) mit einer Entlüftungsleitung (30, 31) fluidverbunden; und
- in der Schließstellung des Betriebs- und/oder Betankungsentlüftungsventils (21, 22) ist des Kraftfahrzeugtank (10) von der Entlüftungsleitung (30, 31) mittels des Betriebs- und/oder Betankungsentlüftungsventils (21, 22) fluidgetrennt.

19. Kraftfahrzeugtank (10) nach einem der Ansprüche 13 bis 18, **gekennzeichnet durch** die folgenden Merkmale:
- der zumindest eine Aktuator (20) ist als ein Rückschlagventil (20) ausgebildet, das in einem in den Kraftfahrzeugtank (10) mündenden Einfüllrohr (11) angeordnet ist;
- das Rückschlagventil (20) ist elektrisch und/oder elektromagnetisch zwischen einer Offenstellung und einer Schließstellung betätigbar;
- in der Offenstellung des Rückschlagventils (20) ist der Kraftfahrzeugtank (10) mit dem Einfüllrohr (11) fluidverbunden;
- in der Schließstellung des Rückschlagventils (20) ist der Kraftfahrzeugtank (10) von dem Einfüllrohr (11) mittels des Rückschlagventils (20) fluidgetrennt oder die lichte Weite des Einfüllrohrs (11) ist mittels des Rückschlagventils (20) reduziert.

20. Kraftfahrzeugtank (10) nach einem der Ansprüche 13 bis 19, **gekennzeichnet durch** die folgenden Merkmale:
- der zumindest eine Aktuator (25) ist als ein Störkörper (25) ausgebildet, der in einem in den Kraftfahrzeugtank (10) mündenden Einfüllrohr (11) angeordnet ist;
- der Störkörper (25) ist elektrisch und/oder elektromagnetisch zwischen einer Offenstellung und einer Störstellung betätigbar;
- in der Offenstellung des Störkörpers (25) ist eine lichte Weite des Einfüllrohres (11) nicht reduziert; und
- in der Störstellung des Störkörpers (25) ragt dieser in das Einfüllrohr (11) und reduziert die lichte Weite des Einfüllrohrs (11).

21. Kraftfahrzeugtank (10) nach einem der Ansprüche 13 bis 20, **gekennzeichnet durch** die folgenden Merkmale:
- der zumindest eine Aktuator (23, 44) ist als Absperrventil (23, 44) ausgebildet, das zwischen dem Kraftfahrzeugtank (10) und einem Aktivkohlefilter (40) angeordnet ist;
- das Absperrventil (23, 44) ist elektrisch und/oder elektromagnetisch zwischen einer Offenstellung und einer Schließstellung betätigbar;
- in der Offenstellung des Absperrventils (23, 44) ist der Kraftfahrzeugtank (10) mittels des Absperrventils (23, 44) mit dem Aktivkohlefilter (40) fluidverbunden; und
- in der Schließstellung des Absperrventils (23, 44) ist der Kraftfahrzeugtank (10) von dem Aktivkohlefilter (40) mittels des Absperrventils (23, 44) fluidgetrennt.

22. Kraftfahrzeugtank (10) nach einem der Ansprüche 13 bis 21, **gekennzeichnet durch** die folgenden Merkmale:
- der zumindest eine Aktuator (24) ist als ein Elektromagnet (24) ausgebildet, der in einem Einfüllstutzen (12) eines in den Kraftfahrzeugtank (10) mündenden Einfüllrohrs (11) angeordnet ist;
- der Elektromagnet (24) ist zwischen einem Aktivzustand und einem Passivzustand betätigbar;
- im Aktivzustand erzeugt der Elektromagnet (24) ein Magnetfeld; und
- im Passivzustand erzeugt der Elektromagnet (24) kein Magnetfeld.

## Claims

1. Method for filling a motor vehicle tank (10), comprising the following method steps:
- establishing a data-exchanging connection between a vehicle-side tank control device (60) and an electronic data memory (71);
- determining a fuel quantity to be introduced into the motor vehicle tank (10) by means of data transmitted via the data-exchanging connection from the electronic data memory (71);
- starting a filling process; and
- ending the filling process after the fuel quantity to be introduced has been reached,
wherein the method is **characterized by** the following method steps:
- the starting of the filling process can be initiated by means of the tank control device (60) and/or by means of an electronics unit (70) which comprises the electronic data memory (71);
- the ending of the filling process is initiated by outputting of a filling stop signal; and
- the filling stop signal is transmitted to at least one electrically and/or electromagnetically actuatable actuator (20, 21, 22, 23, 24, 25, 44).

2. Method according to Claim 1, **characterized in that** the ending of the filling process is initiated by means of the tank control device (60) and/or by means of an electronics unit (70) which comprises the electronic data memory (71).

3. Method according to any of the preceding claims, **characterized in that** the method comprises a method step for determining the fuel quantity introduced during the tank filling process.

4. Method according to any of the preceding claims, **characterized in that** the method step of determining the fuel quantity to be introduced into the motor vehicle tank (10) comprises the following method steps:
- determining a distance to a predefined destination from the electronic data memory (71);
- determining at least one consumption-relevant variable from the electronic data memory (71); and
- calculating the fuel quantity to be introduced to reach the predefined destination using the determined distance and the consumption-relevant variable.

5. Method according to Claim 4, **characterized in that** the at least one consumption-relevant variable is selected from one of the following variables:
- navigation data, and/or
- altitude profile and/or route profile of a route to be travelled, and/or
- average fuel consumption, and/or
- driving profile of the driver, and/or
- normal consumption behaviour pattern of the driver, and/or
- calendar entries in an electronic calendar of the driver, and/or
- weather data, and/or
- temperature profile along a route to be travelled, and/or
- traffic information data, and/or
- information relating to the state of charge of a battery provided for driving the motor vehicle, and/or
- fuel price data of refuelling stations situated in the vicinity and/or along the route to be travelled, and/or
- fuel type introduced into the operating liquid container.

6. Method according to any of the preceding claims, **characterized in that** the method step of determining the fuel quantity to be introduced into the motor vehicle tank (10) comprises the following method steps:
- determining an initial fill level of the motor vehicle tank (10); and
- calculating the fuel quantity to be introduced using the determined initial fill level of the motor vehicle tank (10).

7. Method according to any of the preceding claims, **characterized in that** the at least one actuator (20) is a check valve (20) arranged in and/or on a filler pipe (11) of the motor vehicle tank.

8. Method according to any of the preceding claims, **characterized in that** the at least one actuator (23, 44) is a shut-off valve (23, 44) arranged between the motor vehicle tank (10) and an activated carbon filter (40) and/or between the activated carbon filter (40) and the atmosphere.

9. Method according to any of the preceding claims, **characterized in that** the at least one actuator (21, 22) is an operational and/or tank-filling ventilation valve (21, 22) arranged in the motor vehicle tank (10).

10. Method according to any of the preceding claims, **characterized in that** the at least one actuator (25) is an obstruction body (25) which can be introduced into a filler pipe (11) of the motor vehicle tank (10).

11. Method according to any of the preceding claims, **characterized in that** the at least one actuator (24) is an electromagnet (24) inserted in a filler neck (12).

12. Method according to any of the preceding claims, **characterized in that** the method furthermore comprises a method step for establishing a further data-exchanging connection between a vehicle-side tank control device (60) and a filling device, wherein the at least one actuator is arranged in a filling device and the filling stop signal is transmitted via the further data-exchanging connection to the actuator.

13. Motor vehicle tank (10), wherein said motor vehicle tank comprises a tank control device (60) with a data-receiving unit (61) via which data stored in an electronic data memory (71) can be transmitted to the tank control device (60), wherein the motor vehicle tank (10) is **characterized by** the following features:
- the motor vehicle tank (10) comprises at least one electrically and/or electromagnetically actuatable actuator (20, 21, 22, 23, 24, 25) by means of which an ending of a filling process of the motor vehicle tank (10) can be initiated;
- the tank control device (60) is connected to the actuator (20, 21, 22, 23, 24, 25) by means of a data-exchanging connection (101);
- the tank control device (60) is designed to transmit a tank stop signal to the actuator (20, 21, 22, 23, 24, 25) via the data-exchanging connection (101); and
- upon receipt of the tank stop signal, the actuator (20, 21, 22, 23, 24, 25) initiates the ending of the filling process; and
- the tank control device (60) is adapted to carry out the method steps specified in Claims 1 to 12.

14. Motor vehicle tank (10) according to Claim 13, **characterized in that** the tank control device (60) furthermore comprises a data output unit (63) via which a tank start signal and/or a tank stop signal can be output.

15. Motor vehicle tank (10) according to Claim 13 or 14, **characterized by** the following features:
- the motor vehicle tank (10) comprises a fill level sensor (13) and/or a temperature sensor;
- the fill level sensor (13) and/or the temperature sensor is connected to the tank control device (60) by means of a second data-exchanging connection (102); and
- the fill level sensor (13) is designed to transmit data representing a fill level of the motor vehicle tank (10) determined by means of the fill level sensor (13), and/or data determined by means of the temperature sensor, to the tank control device (60) via the second data-exchanging connection (102).

16. Motor vehicle tank (10) according to Claim 15, **characterized by** the following features:
- the tank control device (60) is designed to receive not only the data transmitted from the fill level sensor (13) but also further data representing an inclination of the motor vehicle tank (10); and
- the tank control device (60) is designed to determine an actual fill level by means of the data transmitted from the fill level sensor (13) and data representing the inclination of the motor vehicle tank (10).

17. Motor vehicle tank (10) according to Claim 16, **characterized by** the following features:
- the motor vehicle tank (10) comprises an inclination sensor (80) by means of which the inclination of the motor vehicle tank (10) can be determined; and
- the inclination sensor (80) is connected to the tank control device (60) by means of a third data-exchanging connection (103), via which data determined by the inclination sensor (80) and representing the inclination of the motor vehicle tank (10) can be transmitted to the tank control device (60).

18. Motor vehicle tank (10) according to any of Claims 13 to 17, **characterized by** the following features:
- the at least one actuator (21, 22) is designed as an operational and/or tank-filling ventilation valve (21, 22) which is arranged in the motor vehicle tank (10) ;
- the operational and/or tank-filling ventilation valve (21, 22) is electrically and/or electromagnetically actuatable between an open position and a closed position;
- in the open position of the operational and/or tank-filling ventilation valve (21, 22), the motor vehicle tank (10) is fluidically connected by means of the operational and/or tank-filling ventilation valve (21, 22) to a ventilation line (30, 31); and
- in the closed position of the operational and/or tank-filling ventilation valve (21, 22), the motor vehicle tank (10) is fluidically separated from the ventilation line (30, 31) by means of the operational and/or tank-filling ventilation valve (21, 22).

19. Motor vehicle tank (10) according to any of Claims 13 to 18, **characterized by** the following features:
- the at least one actuator (20) is designed as a check valve (20) which is arranged in a filler pipe (11) which opens into the motor vehicle tank (10);
- the check valve (20) is electrically and/or electromagnetically actuatable between an open position and a closed position;
- in the open position of the check valve (20), the motor vehicle tank (10) is fluidically connected to the filler pipe (11);
- in the closed position of the check valve (20), the motor vehicle tank (10) is fluidically separated from the filler pipe (11) by means of the check valve (20), or the clear width of the filler pipe (11) is reduced by means of the check valve (20).

20. Motor vehicle tank (10) according to any of Claims 13 to 19, **characterized by** the following features:
- the at least one actuator (25) is designed as an obstruction body (25) which is arranged in a filler pipe (11) which opens into the motor vehicle tank (10) ;
- the obstruction body (25) is electrically and/or electromagnetically actuatable between an open position and an obstruction position;
- in the open position of the obstruction body (25), a clear width of the filler pipe (11) is not reduced; and
- in the obstruction position of the obstruction body (25), the latter projects into the filler pipe (11) and reduces the clear width of the filler pipe (11).

21. Motor vehicle tank (10) according to any of Claims 13 to 20, **characterized by** the following features:
- the at least one actuator (23, 44) is designed as a shut-off valve (23, 44) which is arranged between the motor vehicle tank (10) and an activated carbon filter (40);
- the shut-off valve (23, 44) is electrically and/or electromagnetically actuatable between an open position and a closed position;
- in the open position of the shut-off valve (23, 44), the motor vehicle tank (10) is fluidically connected by means of the shut-off valve (23, 44) to the activated carbon filter (40); and
- in the closed position of the shut-off valve (23, 44), the motor vehicle tank (10) is fluidically separated from the activated carbon filter (40) by means of the shut-off valve (23, 44).

22. Motor vehicle tank (10) according to any of Claims 13 to 21, **characterized by** the following features:
- the at least one actuator (24) is designed as an electromagnet (24) which is arranged in a filler neck (12) of a filler pipe (11) which opens into the motor vehicle tank (10);
- the electromagnet (24) is actuatable between an active state and a passive state;
- in the active state, the electromagnet (24) generates a magnetic field; and
- in the passive state, the electromagnet (24) generates no magnetic field.

## Revendications

1. Procédé de remplissage d'un réservoir de véhicule automobile (10), comprenant les étapes de procédé suivantes:
- établir une liaison d'échange de données entre un dispositif de commande de réservoir côté véhicule (60) et une mémoire de données électronique (71);
- déterminer une quantité de carburant à verser dans le réservoir de véhicule automobile (10) au moyen de données transmises à partir de la mémoire de données électronique (71) par l'intermédiaire de la liaison d'échange de données;
- démarrer une opération de remplissage; et
- terminer l'opération de remplissage après avoir atteint la quantité de carburant à verser,
dans lequel le procédé est **caractérisé par** les étapes de procédé suivantes:
- le démarrage de l'opération de remplissage peut être déclenché au moyen du dispositif de commande de réservoir (60) et/ou d'une unité électronique (70) comprenant la mémoire de données électronique (71);
- la fin de l'opération de remplissage est déclenchée par l'émission d'un signal d'arrêt de remplissage; et
- le signal d'arrêt de remplissage est transmis à au moins un actionneur (20, 21, 22, 23, 24, 25, 44) à actionnement électrique et/ou électromagnétique.

2. Procédé selon la revendication 1, **caractérisé en ce que** l'on déclenche la fin de l'opération de remplissage au moyen du dispositif de commande de réservoir (60) et/ou d'une unité électronique (70) comprenant la mémoire de données électronique (71).

3. Procédé selon l'une quelconque des revendications précédentes, **caractérisé en ce que** le procédé comprend une étape de procédé pour déterminer la quantité de carburant versée pendant l'opération de remplissage.

4. Procédé selon l'une quelconque des revendications précédentes, **caractérisé en ce que** l'étape de procédé de détermination de la quantité de carburant à verser dans le réservoir de véhicule automobile (10) comprend les étapes de procédé suivantes:
- déterminer une distance d'une destination prédéterminée à partir de la mémoire de données électronique (71);
- déterminer au moins une grandeur liée à la consommation à partir de la mémoire de données électronique (71); et
- calculer la quantité de carburant à verser pour atteindre la destination prédéterminée en utilisant la distance précitée et la grandeur liée à la consommation.

5. Procédé selon la revendication 4, **caractérisé en ce que** ladite au moins une grandeur liée à la consommation est sélectionnée parmi une des grandeurs suivantes:
- données de navigation, et/ou
- profil du relief et/ou profil de l'itinéraire d'un itinéraire à parcourir, et/ou
- consommation moyenne de carburant, et/ou
- profil de conduite du conducteur, et/ou
- modèle de comportement de consommation régulier du conducteur, et/ou
- rendez-vous inscrits dans l'agenda du conducteur, et/ou
- données météorologiques, et/ou
- profil de température le long de l'itinéraire à parcourir, et/ou
- données d'informations sur le trafic, et/ou
- informations sur l'état de charge d'une batterie prévue pour l'entraînement du véhicule automobile, et/ou
- données de prix du carburant de stations-service se trouvant dans les environs et/ou le long de l'itinéraire à parcourir, et/ou
- type de carburant versé dans le réservoir de liquide de fonctionnement.

6. Procédé selon l'une quelconque des revendications précédentes, **caractérisé en ce que** l'étape de procédé de détermination de la quantité de carburant à verser dans le réservoir de véhicule automobile (10) comprend les étapes de procédé suivantes:
- déterminer un niveau de remplissage initial du réservoir de véhicule automobile; et
- calculer la quantité de carburant à verser en utilisant le niveau de remplissage initial déterminé du réservoir de véhicule automobile (10).

7. Procédé selon l'une quelconque des revendications précédentes, **caractérisé en ce que** ledit au moins un actionneur (20) est un clapet anti-retour (20) disposé dans et/ou sur un tube de remplissage (11) du réservoir de véhicule automobile.

8. Procédé selon l'une quelconque des revendications précédentes, **caractérisé en ce que** ledit au moins un actionneur (23, 44) est une soupape d'arrêt (23, 44) disposée entre le réservoir de véhicule automobile (10) et un filtre à charbon actif (40) et/ou entre le filtre à charbon actif (40) et l'atmosphère.

9. Procédé selon l'une quelconque des revendications précédentes, **caractérisé en ce que** ledit au moins un actionneur (21, 22) est une soupape de ventilation de fonctionnement et/ou de remplissage (21, 22) disposée dans le réservoir de véhicule automobile (10).

10. Procédé selon l'une quelconque des revendications précédentes, **caractérisé en ce que** ledit au moins un actionneur (25) est un corps perturbateur (25) insérable dans un tube de remplissage (11) du réservoir de véhicule automobile (10).

11. Procédé selon l'une quelconque des revendications précédentes, **caractérisé en ce que** ledit au moins un actionneur (24) est un électroaimant (24) introduit dans un tuyau de remplissage (12).

12. Procédé selon l'une quelconque des revendications précédentes, **caractérisé en ce que** le procédé comprend en outre une étape de procédé pour établir une autre liaison d'échange de données entre un dispositif de commande de réservoir côté véhicule (60) et un dispositif de remplissage, dans lequel ledit au moins un actionneur est disposé dans un dispositif de remplissage et le signal d'arrêt de remplissage est envoyé à l'actionneur par l'intermédiaire de l'autre liaison d'échange de données.

13. Réservoir de véhicule automobile (10), dans lequel celui-ci comprend un dispositif de commande de réservoir (60) avec une unité de réception de données (61), par laquelle des données mémorisées dans une mémoire de données électronique (71) peuvent être transmises au dispositif de commande de réservoir (60), dans lequel le réservoir de véhicule automobile (10) est **caractérisé par** les caractéristiques suivantes:
- le réservoir de véhicule automobile (10) comprend au moins un actionneur (20, 21, 22, 23, 24, 25) à actionnement électrique et/ou électromagnétique, au moyen duquel une fin d'une opération de remplissage du réservoir de véhicule automobile (10) peut être déclenchée;
- le dispositif de commande de réservoir (60) est relié à l'actionneur (20, 21, 22, 23, 24, 25) par une liaison d'échange de données (101);
- le dispositif de commande de réservoir (60) est configuré pour transmettre à l'actionneur (20, 21, 22, 23, 24, 25) un signal d'arrêt de remplissage par l'intermédiaire de la liaison d'échange de données (101); et
- à la réception du signal d'arrêt de remplissage, l'actionneur (20, 21, 22, 23, 24, 25) déclenche la fin de l'opération de remplissage; et
- le dispositif de commande de réservoir (60) est adapté pour exécuter les étapes de procédé indiquées dans les revendications 1 à 12.

14. Réservoir de véhicule automobile (10) selon la revendication 13, **caractérisé en ce que** le dispositif de commande de réservoir (60) comprend en outre une unité d'émission de données (63), qui permet d'émettre un signal de début de remplissage et/ou un signal d'arrêt de remplissage.

15. Réservoir de véhicule automobile (10) selon la revendication 13 ou 14, **caractérisé par** les caractéristiques suivantes:
- le réservoir de véhicule automobile (10) comprend un détecteur de niveau de remplissage (13) et/ou un capteur de température;
- le détecteur de niveau de remplissage (13) et/ou le capteur de température est relié au dispositif de commande de réservoir (60) par une deuxième liaison d'échange de données (102); et
- le détecteur de niveau de remplissage (13) est configuré pour transmettre au dispositif de commande de réservoir (60), par la deuxième liaison d'échange de données (102), des données qui représentent un niveau de remplissage du réservoir de véhicule automobile (10) déterminé au moyen du détecteur de niveau de remplissage (13) et/ou qui sont déterminées au moyen du capteur de température.

16. Réservoir de véhicule automobile (10) selon la revendication 15, **caractérisé par** les caractéristiques suivantes:
- le dispositif de commande de réservoir (60) est configuré pour recevoir, en plus des données transmises par le détecteur de niveau de remplissage (13), d'autres données représentant une inclinaison du réservoir de véhicule automobile (10); et
- le dispositif de commande de réservoir (60) est configuré pour déterminer un niveau de remplissage réel au moyen des données transmises par le détecteur de niveau de remplissage (13) et des données représentant l'inclinaison du réservoir de véhicule automobile (10).

17. Réservoir de véhicule automobile (10) selon la revendication 16, **caractérisé par** les caractéristiques suivantes:
- le réservoir de véhicule automobile (10) comprend un détecteur d'inclinaison (80), au moyen duquel l'inclinaison du réservoir de véhicule automobile (10) peut être déterminée; et
- le détecteur d'inclinaison (80) est relié au dispositif de commande de réservoir (60) par une troisième liaison d'échange de données (103), par laquelle les données déterminées par le détecteur d'inclinaison (80) et représentant l'inclinaison du réservoir de véhicule automobile (10) peuvent être transmises au dispositif de commande de réservoir (60).

18. Réservoir de véhicule automobile (10) selon l'une quelconque des revendications 13 à 17 **caractérisé par** les caractéristiques suivantes:
- ledit au moins un actionneur (21, 22) est formé par une soupape de ventilation de fonctionnement et/ou de remplissage (21, 22), qui est disposée dans le réservoir de véhicule automobile (10);
- la soupape de ventilation de fonctionnement et/ou de remplissage (21, 22) peut être actionnée par voie électrique et/ou électromagnétique entre une position ouverte et une position fermée;
- dans la position ouverte de la soupape de ventilation de fonctionnement et/ou de remplissage (21, 22), le réservoir de véhicule automobile (10) est en communication fluidique avec une conduite de ventilation (30, 31) au moyen de la soupape de ventilation de fonctionnement et/ou de remplissage (21, 22); et
- dans la position fermée de la soupape de ventilation de fonctionnement et/ou de remplissage (21, 22), le réservoir de véhicule automobile (10) est fluidiquement séparé de la conduite de ventilation (30, 31) au moyen de la soupape de ventilation de fonctionnement et/ou de remplissage (21, 22).

19. Réservoir de véhicule automobile (10) selon l'une quelconque des revendications 13 à 18, **caractérisé par** les caractéristiques suivantes:
- ledit au moins un actionneur (20) est formé par un clapet anti-retour (20), qui est disposé dans un tube de remplissage (11) débouchant dans le réservoir de véhicule automobile (10);
- le clapet anti-retour (20) peut être actionné par voie électrique et/ou électromagnétique entre une position ouverte et une position fermée;
- dans la position ouverte du clapet anti-retour (20), le réservoir de véhicule automobile (10) est en communication fluidique avec le tube de remplissage (11) ;
- dans la position fermée du clapet anti-retour (20), le réservoir de véhicule automobile (10) est fluidiquement séparé du tube de remplissage (11) au moyen du clapet anti-retour (20) ou la largeur libre du tube de remplissage (11) est réduite au moyen du clapet anti-retour (20).

20. Réservoir de véhicule automobile (10) selon l'une quelconque des revendications 13 à 19, **caractérisé par** les caractéristiques suivantes:
- ledit au moins un actionneur (25) est formé par un corps perturbateur (25), qui est disposé dans un tube de remplissage (11) débouchant dans le réservoir de véhicule automobile (10);
- le corps perturbateur (25) peut être actionné par voie électrique et/ou électromagnétique entre une position ouverte et une position fermée;
- dans la position ouverte du corps perturbateur (25), une largeur libre du tube de remplissage (11) n'est pas réduite; et
- dans la position fermée du corps perturbateur (25), celui-ci pénètre dans le tube de remplissage (11) et réduit la largeur libre du tube de remplissage (11).

21. Réservoir de véhicule automobile (10) selon l'une quelconque des revendications 13 à 20, **caractérisé par** les caractéristiques suivantes:
- ledit au moins un actionneur (23, 44) est formé par une soupape d'arrêt (23, 44), qui est disposée entre le réservoir de véhicule automobile (10) et un filtre à charbon actif (40);
- la soupape d'arrêt (23, 44) peut être actionnée par voie électrique et/ou électromagnétique entre une position ouverte et une position fermée;
- dans la position ouverte de la soupape d'arrêt (23, 44), le réservoir de véhicule automobile (10) est en communication fluidique avec le filtre à charbon actif (40) au moyen de la soupape d'arrêt (23, 44); et
- dans la position fermée de la soupape d'arrêt (23, 44), le réservoir de véhicule automobile (10) est fluidiquement séparé du filtre à charbon actif (40) au moyen de la soupape d'arrêt (23, 44).

22. Réservoir de véhicule automobile (10) selon l'une quelconque des revendications 13 à 21, **caractérisé par** les caractéristiques suivantes:
- ledit au moins un actionneur (24) est formé par un électroaimant (24), qui est disposé dans un tuyau de remplissage (12) d'un tube de remplissage (11) débouchant dans le réservoir de véhicule automobile (10) ;
- l'électroaimant (24) peut être actionné entre un état actif et un état passif;
- dans l'état actif, l'électroaimant (24) produit un champ magnétique; et
- dans l'état passif, l'électroaimant (24) ne produit pas de champ magnétique.
